# EUROPEAN PATENT APPLICATION

(11) **EP 2 058 152 A1**
(43) Date of publication of application: **13.05.2009**
(21) Application number: 08710862.7
(22) Date of filing: 06.02.2008
(51) Int. Cl.: B60G 1/02, B60B 35/04, B60G 7/04, B60G 11/24, B60G 17/0185, B60G 17/019, B66F 9/075, F16F 15/08

(54) **REAR AXLE INSTALLATION STRUCTURE FOR FORKLIFT AND FORKLIFT WITH THE SAME**

(30) Priority: 08.02.2007 JP 2007028733
(71) Applicant: Mitsubishi Heavy Industries, Ltd., Tokyo 108-8215 (JP)
(72) Inventor: HAKODA, Hironobu, Takasago-shi Hyogo 676-8686 (JP); KONDO, Junji, Sagamihara-shi Kanagawa 229-1193 (JP)
(74) Representative: Henkel, Feiler & Hänzel
(86) International application number: PCT/JP2008/051966
(87) International publication number: WO 2008/096793

(57) **Abstract**

An object of the present invention is to provide a rear axle attachment structure of a forklift capable of controlling deterioration of mounting bushes and stoppers, and to provide a forklift including the same. A rear axle attachment structure for a forklift includes mounting shafts (32) protruding from front and rear sides of a rear axle and mounting bushes (30) each having rubber (35) provided between a tubular outer frame (33) and a tubular inner frame (34) and being attached to a vehicle body, each of the mounting shaft being inserted into a mounting hole (38) within the inner frame. The attachment structure further includes protrusion amount control means controlling an amount of protrusion of an upper portion (35a) of the rubber (35), the portion being above the inner frame (34) and protruding from between the outer frame (33) and inner frame (34) in vehicle front and rear directions. The protrusion amount control means, for example, is protrusion amount control plates (41) provided at the front and rear of the outer frame (33) with a gap (S) between the rubber (35) and each protrusion amount control plate(41).

## Description

### TECHNICAL FIELD

The present invention relates to a rear axle attachment structure of a forklift and a forklift including the same.

### BACKGROUND ART

As rear axle attachment structures of forklifts, a structure including mounting bushes made of rubber, bearings made of metal, a suspension or the like have been generally known.

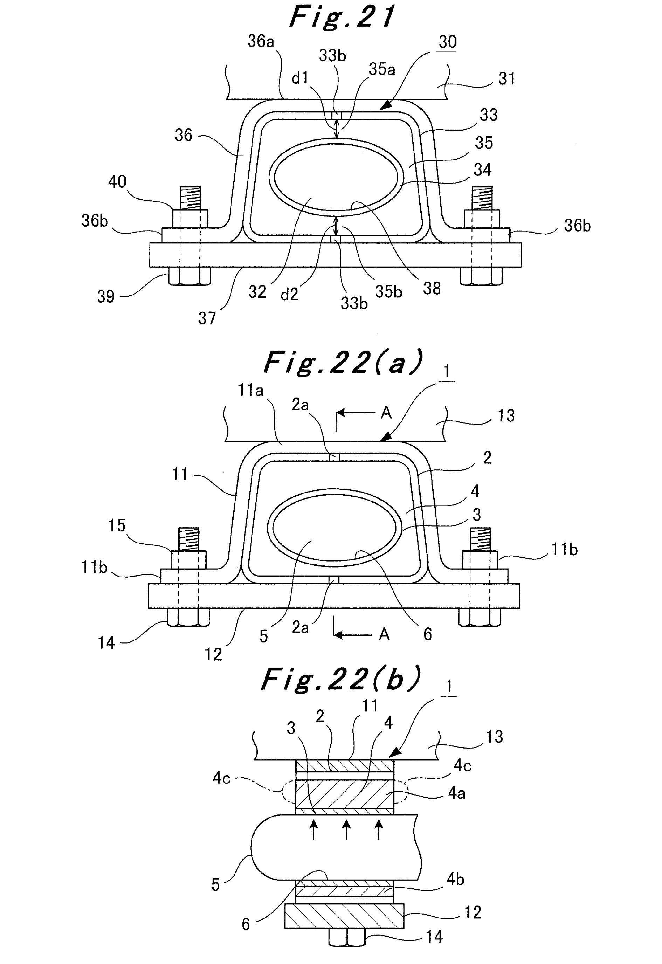

Fig. 22(a) shows a front view of a conventional rear axle attachment structure of a forklift including rubber-made mounting bushes, and Fig. 22(b) shows a cross-sectional view of Fig. 22(a) taken along a line A-A as viewed in the direction of arrows A.

As shown in these drawings, a conventional mounting bush 1 includes rubber 4 between a tubular outer frame 2 and a tubular inner frame 3. The outer frame 2 is trapezoidal in the front view and is separated into two blocks of right and left at a central separating portion 2a. Meanwhile, the inner frame 3 is elliptic in the front view. The rubber 4 is formed by pouring a heated rubber material into a space between the outer and inner frames 2 and 3, and adheres to the inner surface of the outer frame 2 and the outer surface of the inner frame 3.

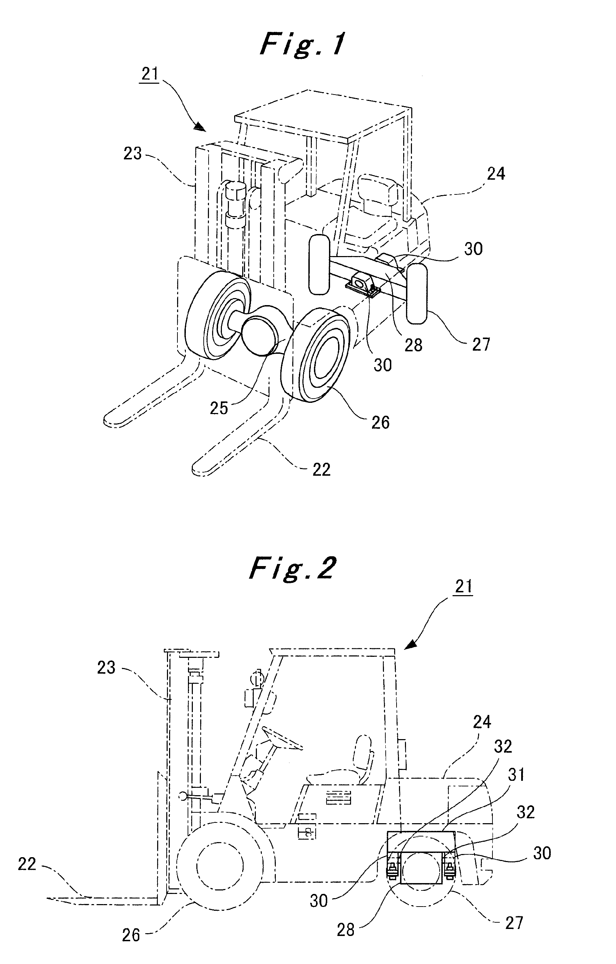

The mounting bush 1 is attached to a vehicle body (a body frame 13) of the forklift using attachment jigs 11 and 12, and each of mounting shafts 5 protruding from the front and rear sides of a not-shown rear axle (see Figs. 1 to 3) is inserted into a mounting hole 6 within the inner frame 3.

The attachment jig 11 includes: a body 11a trapezoidal in the front view; and flanges 11b horizontally extending on both sides of the body 11a. The body 11a is welded to the body frame 13. The attachment jig 12 is plate-shaped.

The mounting bush 1 is fitted into the body 11a of the attachment jig 11 in such a manner as to be pressed upward from below. The gap of the separating portion 2a of the outer frame 2 is narrowed at this time, so that the mounting bush 1 is fixed to the body 11a of the attachment jig 11 with the rubber 4 always being subjected to compression load. The attachment jig 12 is fastened to the flanges 11b of the attachment jig 11 by bolts 14 and nuts 15 and supports the bottom surface of the mounting bush 1. The attachment jig 12 surrounds the mounting bush 1 together with the attachment jig 11 supporting top and side surfaces of the mounting bush 1.

The mounting shaft 5 and mounting hole 6 are elliptical in the front view. The mounting shaft 5 is therefore prevented from freely rotating when the rear axle swings (rolls) around the mounting shaft 5. Accordingly, the mounting bush 1 can receive not only vertical load but also torsional load during the swinging.

Compared to the rear axle attachment structures including metallic bearings or suspensions, the rear axle attachment structure including such a rubber-made mounting bush 1 has advantages of being maintenance free because of not requiring oil injection and the like, and being low cost because of the simple structure thereof.

Patent Document 1: JP-A 4-339005
Patent Document 2: JP-A 10-166824
Patent Document 3: JP-A 2004-306952
Patent Document 4: JP-A 2004-354355

### DISCLOSURE OF THE INVENTION

### PROBLEMS TO BE SOLVED BY THE INVENTION

However, the use of the mounting bush 1 made of rubber involves a problem of damage of the rubber 4. The damage is caused as follows: The weight of the forklift is heavy because of a counter-weight mounted on the rear of the forklift and the like. Thus, the mounting bush 1 receives very large load when the forklift runs on rough part of road surfaces. Accordingly, the large load causes large compression deformation of a portion 4a of the rubber 4 above the inner frame 3 (especially protruding amount of a protrusion 4c protruding from between the outer and inner frames 2 and 3 in the vehicle front and rear directions becomes large) as shown in Fig. 22(b), thus causing the rubber 4 to deteriorate (fatigue).

Generally, rubber is less likely to deteriorate when being subjected to only compression load. However, the protrusion 4c of the rubber 4 is subjected to tensile load and is therefore more likely to deteriorate. Moreover, when the upper portion 4a of the rubber 4 is deformed by compression, a lower portion 4b of the rubber 4 below the inner frame 3 is subjected to tensile load. Accordingly the lower portion 4b is more likely to deteriorate.

Accordingly, in the light of the aforementioned circumstances, an object of the present invention is to provide a rear axle attachment structure of a forklift and a forklift including the same capable of controlling the deterioration of rubber of mounting bushes and stoppers, and of preventing a damage caused by contact between a rear axle and a vehicle body to be damaged because of the deterioration of the rubber of the mounting bushes.

### MEANS FOR SOLVING THE PROBLEMS

To solve the aforementioned problems, a rear axle attachment structure of a forklift of a first invention including mounting shafts protruding respectively from front and rear sides of a rear axle and mounting bushes each having a configuration in which rubber is provided between a tubular outer frame and a tubular inner frame and is attached to a vehicle body, each of the mounting shafts being inserted into a mounting hole within the inner frame is characterized by comprising
protrusion amount control means controlling an amount of protrusion of an upper portion of the rubber above the inner frame, the upper portion protruding from between the outer and inner frames in vehicle front and rear directions.

A rear axle attachment structure of a forklift of a second invention is the rear axle attachment structure for a forklift of the first invention **characterized in that**
the protrusion amount control means is protrusion amount control plates provided at front and rear of upper part of the outer frame with a gap between the rubber and each protrusion amount control plate.

A rear axle attachment structure of a forklift of a third invention is the rear axle attachment structure for a forklift of the first invention **characterized in that**
the outer frame is trapezoidal or rectangular, and
the protrusion amount control means is triangular protrusion amount control plates provided respectively at the front and rear of each upper corner of the outer frame with a gap between the rubber and each protrusion amount control plate.

A rear axle attachment structure of a forklift of a fourth invention is the rear axle attachment structure for a forklift of the second or third invention **characterized in that**
as the protrusion amount control plates, a plurality of types of protrusion amount control plates including protrusion amount control portions different in thickness are prepared, and one selected from the plurality of types of protrusion amount control plates is detachably bolted to the outer frame.

A rear axle attachment structure of a forklift of a fifth invention is the rear axle attachment structure for a forklift of the second or third invention **characterized in that**
a plurality of types of spacers different in thickness are prepared, and
each of the protrusion amount control plates is detachably bolted to the outer frame with any one of the spacers interposed therebetween.

A rear axle attachment structure of a forklift of a sixth invention is the rear axle attachment structure for a forklift of the first invention **characterized in that**
the protrusion amount control means is protrusion amount control plates provided on a vehicle body in front and rear of each mounting bush with a gap between the rubber and each protrusion amount control plate.

A rear axle attachment structure of a forklift of a seventh invention is the rear axle attachment structure for a forklift of the second or sixth invention **characterized in that**
a recessed portion having a shape following an outer circumference of the mounting shafts is formed at the bottom end of each of the protrusion amount control plates.

A rear axle attachment structure of a forklift of an eighth invention is the rear axle attachment structure for a forklift of the sixth invention **characterized in that**
as the protrusion amount control plates, a plurality of types of protrusion amount control plates including protrusion amount control portions different in thickness are prepared, and one selected from the plurality of types of protrusion amount control plates are detachably bolted to the vehicle body.

A rear axle attachment structure of a forklift of a ninth invention is the rear axle attachment structure for a forklift of the sixth invention **characterized in that**
a plurality of types of spacers different in thickness are prepared, and each of the protrusion amount control plates is detachably bolted to the vehicle body with any one of the spacers interposed therebetween.

A rear axle attachment structure of a forklift of a tenth invention including mounting shafts protruding from front and rear sides of a rear axle and mounting bushes each having a configuration in which rubber is provided between a tubular outer frame and a tubular inner frame and being attached to a vehicle body, each mounting shaft being inserted into a mounting hole within the inner frame is **characterized in that**
the mounting hole of each mounting bush is circular,
each mounting shaft is columnar and is rotatably inserted into the mounting hole,
stoppers which are attached to the vehicle body and restrict swinging of the rear axle around the mounting shaft are provided on both sides in a vehicle width direction of top surface of the rear axle, and each of the stoppers includes an inverted-cone-shaped rubber and a cover surrounding the rubber with a gap between the rubber and the cover to control an amount of horizontal bulge of the rubber.

A rear axle attachment structure of a forklift of an eleventh invention is the rear axle attachment structure for a forklift of any one of the second, third, sixth, and tenth inventions characterized in that
any one of the protrusion amount control plates and the cover is made of a resin material.

A rear axle attachment structure of a forklift of a twelfth invention including mounting shafts protruding from front and rear sides of a rear axle and mounting bushes, the mounting shafts being inserted into mounting holes of the mounting bushes is characterized in that
each of the mounting bushes has a dual structure in which a second mounting bush is laid on a first mounting bush,
each of the first mounting bushes has a configuration in which rubber is provided between a tubular outer frame and a tubular inner frame, and the mounting shaft is inserted into the mounting hole within the inner frame, and
each of the second mounting bushes has a configuration in which rubber is provided between an upper plate and a lower plate.

A rear axle attachment structure of a forklift of a thirteenth invention including mounting shafts protruding from front and rear sides of a rear axle and mounting bushes each having a configuration in which rubber is provided between a tubular outer frame and a tubular inner frame and being attached to a vehicle body, each of the mounting shaft being inserted into a mounting hole within the inner frame is characterized by comprising
a wire provided in a lower portion of the rubber below the inner frame, and
disconnection detection means detecting disconnection of the wire by detecting an electrical change of the wire when the wire is stretched upward together with the lower portion of the rubber and is disconnected.

A rear axle attachment structure for a forklift of a fourteenth invention including mounting shafts protruding from front and rear sides of a rear axle and mounting bushes each having configuration in which rubber is provided between a tubular outer frame and a tubular inner frame and being attached to a vehicle body, each of the mounting shafts being inserted into a mounting hole within the inner frame is characterized by comprising
displacement amount detection means detecting an amount of upward displacement of the mounting shafts.

A rear axle attachment structure of a forklift of a fifteenth invention including mounting shafts protruding from front and rear sides of a rear axle and mounting bushes each having configuration in which rubber is provided between a tubular outer frame and a tubular inner frame and being attached to a vehicle body, each of the mounting shafts being inserted into a mounting hole within the inner frame is characterized by comprising
protrusion amount detection means detecting an amount of protrusion of an upper portion of the rubber above the inner frame, the upper portion protruding from between the outer and inner frames.

A rear axle attachment structure of a forklift of a sixteenth invention is the rear axle attachment structure for a forklift of any one of the second, third, and sixth inventions characterized by further comprising
displacement amount detection means detecting an amount of displacement of the protrusion amount control plates in the vehicle front and rear directions.

A rear axle attachment structure for a forklift of a seventeenth invention comprises: mounting shafts protruding from front and rear of a rear axle and mounting bushes each having configuration in which rubber is provided between a tubular outer frame and a tubular inner frame and being attached to a vehicle body, each of the mounting shafts being inserted into a mounting hole within the inner frame is characterized in that
the width of an upper portion of the rubber above the inner frame between the outer and inner frames is equal to the width of a lower portion of the rubber below the inner frame between the outer and inner frames.

A forklift of an eighteenth invention comprises the rear axle attachment structure of the first to seventeenth inventions.

### EFFECTS OF THE INVENTION

According to the rear axle attachment structure of a forklift of the first invention, the attachment structure is characterized by including the protrusion amount control means for controlling the amount of protrusion of the upper portion of the rubber, the portion being above the inner frame and protruding from between the outer and inner frames in vehicle front and rear directions. Accordingly, the amount of protrusion of the upper portion of the rubber is controlled by the protrusion amount control means, so that the deterioration of the rubber can be controlled. It is therefore possible to increase the lifetime of the mounting bushes and reduce the frequency of changing the mounting bushes.

According to the rear axle attachment structure of a forklift of the second invention, the attachment structure is characterized in that the protrusion amount control means is the protrusion amount control plates provided at the front and rear of the upper part of the outer frame with the gap between the rubber and each protrusion amount control plate. Accordingly, in a similar manner to the aforementioned first invention, the amount of protrusions of the upper portion of the rubber is controlled by the protrusion amount control plates, so that the deterioration (fatigue) of the rubber can be controlled. It is therefore possible to increase the lifetime of the mounting bushes and reduce the frequency of changing the mounting bushes. Moreover, such effects can be achieved at low cost. Furthermore, since the protrusion amount control plates are provided at the mounting bushes, the work of changing the mounting bushes can be performed by changing only the mounting bushes.

According to the rear axle attachment structure of a forklift of the third invention, the attachment structure is characterized in that the protrusion amount control means is the triangular protrusion amount control plates provided at the front and rear of both upper corners of the outer frame, respectively, with a gap between the rubber and each protrusion amount control plate. Accordingly, in a similar manner to the aforementioned first invention, the amount of protrusions of the upper portion of the rubber is controlled by the protrusion amount control plates, so that the deterioration (fatigue) of the rubber can be controlled. It is therefore possible to increase the lifetime of the mounting bushes and reduce the frequency of changing the mounting bushes. Moreover, such effects can be implemented at low cost. Furthermore, since the protrusion amount control plates are provided for the mounting bushes, the work of changing the mounting bushes can be performed by changing only the mounting bushes. Still furthermore, it is possible to efficiently control the protrusions of the rubber around the both upper corners of the outer frame, where relatively large amount of rubber is included and a lot of rubber protrudes. Still furthermore, the outer frame of each mounting bush can be divided at the central separating portion into two blocks of right and left like the conventional one. The mounting bush can be therefore easily and reliably assembled. Moreover, the sides of the right and left protrusion amount control plates form a chevron, and the mounting shafts can be prevented from coming into contact with the protrusion amount control plates in the range where the mounting shafts normally move up and down. Moreover, even if the mounting shafts move up as the rubber deteriorates, the mounting shafts come into contact with the protrusion amount control plates and can be prevented from coming into direct contact with the body frame.

According to the rear axle attachment structure of a forklift of the fourth invention, the same effects as those of the second or third invention can be obtained. Moreover, the attachment structure is characterized in that, as the protrusion amount control plates, the plural types of protrusion amount control plates including the protrusion amount control portions different in thickness are prepared, and one selected from the plurality of types of protrusion amount control plates are detachably bolted to the outer frame. Accordingly, protrusion amount control plate attached to the mounting bushes is arbitrarily selected from the plural types of protrusion amount control plates including the protrusion amount control portions different in thickness, thus allowing the width of each gap to be arbitrarily managed (adjusted). The spring constant of the rubber can be therefore arbitrarily selected.

According to the rear axle attachment structure of a forklift of the fifth invention, the same effects as those of the second or third invention can be obtained. Moreover, the attachment structure is characterized in that the plural types of spacers different in thickness are prepared, and each protrusion amount control plates is detachably bolted to the outer frame with any one of the spacers interposed therebetween. Accordingly, by arbitrarily selecting spacer attached to the mounting bushes from the plural types of spacers different in thickness, the width of each gap can be arbitrarily managed (adjusted) The spring constant of the rubber can be therefore arbitrarily selected.

According to the rear axle attachment structure of a forklift of the sixth invention, the attachment structure is characterized in that the protrusion amount control means is the protrusion amount control plates provided on the vehicle body with a gap between the rubber and each protrusion amount control plate. Accordingly, similar to the aforementioned first invention, the amount of protrusion of the upper portion of the rubber is controlled by the protrusion amount control plate, so that the deterioration (fatigue) of the rubber can be controlled. It is therefore possible to increase the lifetime of the mounting bushes and reduce the frequency of changing the mounting bushes. Moreover, such effects can be implemented at low cost. Furthermore, the outer frame of each mounting bush can be divided at the central separating portion into two blocks of right and left like the conventional one. The mounting bushes can be therefore easily and reliably assembled. Still furthermore, the protrusion amount control plates can be installed at arbitrary places of the vehicle body of the forklift, and the conventional mounting bushes can be applied without being changed.

According to the rear axle attachment structure of a forklift of the seventh invention, the same effects as those of the second or sixth invention can be obtained. Moreover, the attachment structure is characterized in that the recessed portion with a shape following the outer circumference of the mounting shaft is formed at the bottom end of each protrusion amount control plates. Accordingly, it is possible to efficiently control the amount of protrusions and prevent the mounting shafts from coming into contact with the protrusion amount control plates in a range where the mounting shafts normally move up and down. Moreover, even if the mounting shafts move up as the rubber deteriorates, the mounting shafts come into contact with the protrusion amount control plates and can be prevented from coming into direct contact with the body frame.

According to the rear axle attachment structure of a forklift of the eighth invention, the same effects as those of the sixth invention can be obtained. Moreover, the attachment structure is characterized in that, as the protrusion amount control plates, the plural types of protrusion amount control plates including the protrusion amount control portions different in thickness are prepared, and one of the plurality of types of protrusion amount control plates are detachably bolted to the vehicle body. Accordingly, each protrusion amount control plates attached to the mounting bushes is arbitrarily selected from the plural types of protrusion amount control plates including the protrusion amount control portions different in thickness, thus allowing the width of each gap to be arbitrarily managed (adjusted). The spring constant of the rubber can be therefore arbitrarily selected.

According to the rear axle attachment structure of a forklift of the ninth invention, the same effects as those of the sixth invention can be obtained. Moreover, the attachment structure is characterized in that the plural types of spacers different in thickness are prepared, and each protrusion amount control plate is detachably bolted to the vehicle body with any one of the spacers interposed therebetween. Accordingly, each spacer attached to the mounting bushes is arbitrarily selected from the plural types of spacers different in thickness, thus allowing the width of each gap to be arbitrarily managed (adjusted). The spring constant of the rubber can be therefore arbitrarily selected.

According to the rear axle attachment structure of a forklift of the tenth invention is characterized in that the mounting hole of each mounting bush is circular, and each mounting shaft is columnar and rotationally is rotatably inserted into the mounting hole, and stoppers which are attached to the vehicle body and restrict swinging of the rear axle around each mounting shaft are provided on the both sides in the vehicle width direction of top surface of the rear axle, each of the stoppers including the inverted-cone-shaped rubber and the cover which surrounds the rubber with the gap between the rubber and cover to control an amount of horizontal bulge of the rubber. Accordingly, the load is shared by the mounting bush and stoppers, and the rubber of the mounting bushes is subjected to only vertical load, thus controlling the deterioration (fatigue) of the rubber. It is therefore possible to increase the lifetime of the mounting bushes and reduce the frequency of changing the mounting bushes. Moreover, the amount of bulge of the rubber of each stopper is controlled by means of the cover, so that the deterioration (fatigue) of the rubber of the stopper can be controlled. The lifetime of the stoppers can be therefore increased.

According to the rear axle attachment structure of a forklift of the eleventh invention, the same effects as those of the second, third, sixth, or tenth invention can be obtained. Moreover, the attachment structure is characterized in that the protrusion amount control plates or the cover are made of the resin materials. Accordingly, even if the mounting shafts come into contact with the protrusion amount control plates or the cover when the mounting shafts move up as the rubber of the mounting bushes deteriorates, the mounting shafts can be prevented from being damaged by the protrusion amount control plates.

According to the rear axle attachment structure of a forklift of the twelfth invention, the attachment structure is characterized in that each mounting bush has the dual structure in which a second mounting bush is laid on the first mounting bush. Each of the first mounting bushes has a configuration in which rubber is provided between tubular outer and inner frames, and the mounting shaft is inserted into the mounting hole within the inner frame. Each of the second mounting bushes has a configuration in which the rubber is provided between the upper and lower plates. Compared to the rubber of the lower first mounting bush, in which the mounting shaft is inserted into the mounting hole, the rubber of the upper second mounting bush, which is separated from the mounting shaft, is less likely to be deteriorated (fatigued) by load. Accordingly, even if the mounting shaft is displaced up because of deterioration of the rubber of the first mounting bush, the presence of the not-deteriorated second mounting bush (rubber) can prevent the mounting shaft from coming into contact with the vehicle body (body frame), thus preventing damages of the same.

According to the rear axle attachment structure of a forklift of the thirteenth invention, the attachment structure is characterized by including the wire provided in a lower portion of the rubber below the inner frame and the disconnection detection device detecting disconnection by detecting an electrical change in the wire when the wire is stretched up together with the lower portion of the rubber and is disconnected. Accordingly, when the compression deformation of the upper portion of the rubber increases as the rubber of the mounting bush deteriorates (fatigues), the amount of protrusions increases, and also the stretch of the lower portion of the rubber increases. The wire is accordingly stretched and disconnected, and the disconnection detection means detects the disconnection. This makes it possible to confirm the time to change the mounting bushes.

According to the rear axle attachment structure of a forklift of the fourteenth invention, the attachment structure is characterized by including the displacement amount detection means detecting the amount of upward displacement of the mounting shaft. Accordingly, when the mounting shaft is displaced (moves) upward as the rubber of the mounting bush deteriorates (fatigues), the amount of displacement of the mounting shaft can be detected by the displacement amount detection means. It is therefore possible to confirm the time to change the mounting bushes.

According to the rear axle attachment structure of a forklift of the fifteenth invention, the attachment structure is characterized by including the protrusion amount detection means detecting the amount of protrusion of the upper portion of the rubber, the portion being above the inner frame and protruding from between the outer and inner frames. Accordingly, when the compression deformation of the upper portion of the rubber increases as the rubber of the mounting bushes deteriorates (fatigues), the amount of protrusion increases. The amount of protrusion can be then detected by the protrusion amount detection means. It is therefore possible to confirm the time to change the mounting bushes.

According to the rear axle attachment structure of a forklift of the sixteenth invention, the same effects as those of the second, third, or sixth invention can be obtained. Moreover, the attachment structure is characterized by including displacement amount detection means detecting the amount of displacement of protrusion amount control plates in the vehicle front or rear directions. Accordingly, when the amount of protrusion of the upper portion of the rubber increases as the rubber of the mounting bushes deteriorates (fatigues), protrusion amount control plates are pressed by the protrusion portion of the upper portion and are displaced in the vehicle front or rear directions. The amount of displacement can be then detected by the displacement amount detection means. It is therefore possible to confirm the time to change the mounting bushes.

According to the rear axle attachment structure of a forklift of the seventeenth invention, the attachment structure is characterized in that the width of the upper portion of the rubber between the outer and inner frames is equal to the width of the lower portion of the rubber between the outer and inner frames. Accordingly, the upper and lower portions of the rubber have equal rigidity, thus facilitating management of the spring constant of the rubber and of the degree of progress of deterioration (fatigue) of the rubber.

According to the forklift of the eighteenth invention, the forklift is characterized by including the rear axle attachment structure of any one of the first to seventeenth inventions. It is therefore possible to implement an excellent forklift exerting the effects of the rear axle attachment structure of any one of the first to seventeenth inventions.

### BRIEF DESCRIPTION OF DRAWINGS

[Fig. 1] Fig. 1 is a perspective view of a forklift according to Embodiment 1 of the present invention.
[Fig. 2] Fig. 2 is a side view of the forklift.
[Fig. 3] Fig. 3 is an enlarged perspective view of a rear axle attachment structure of the forklift.

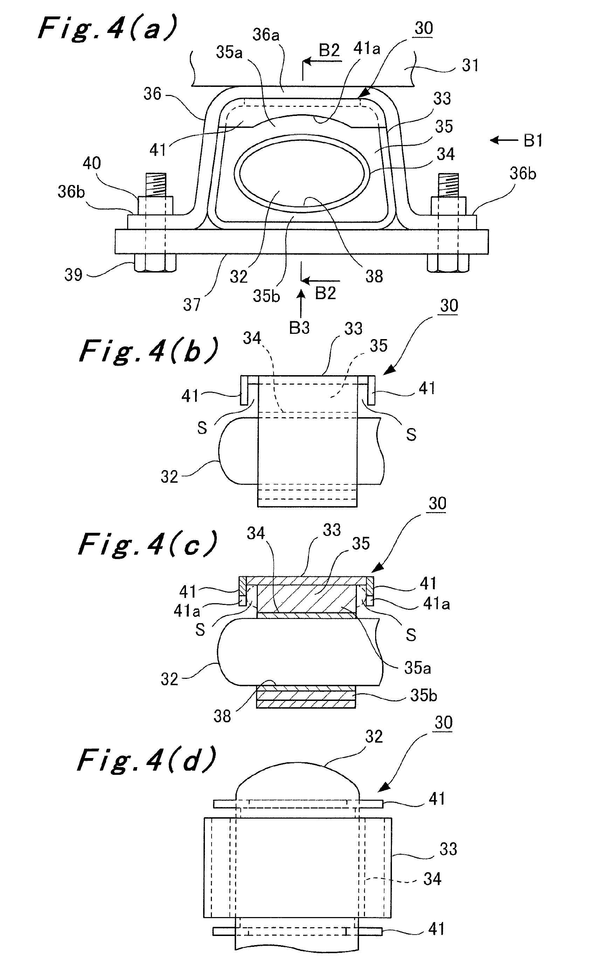

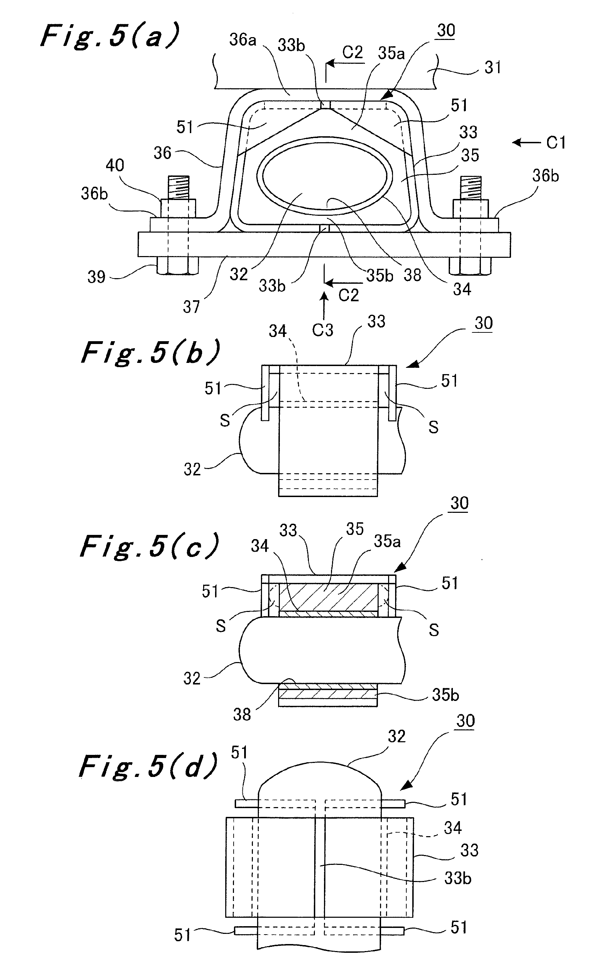

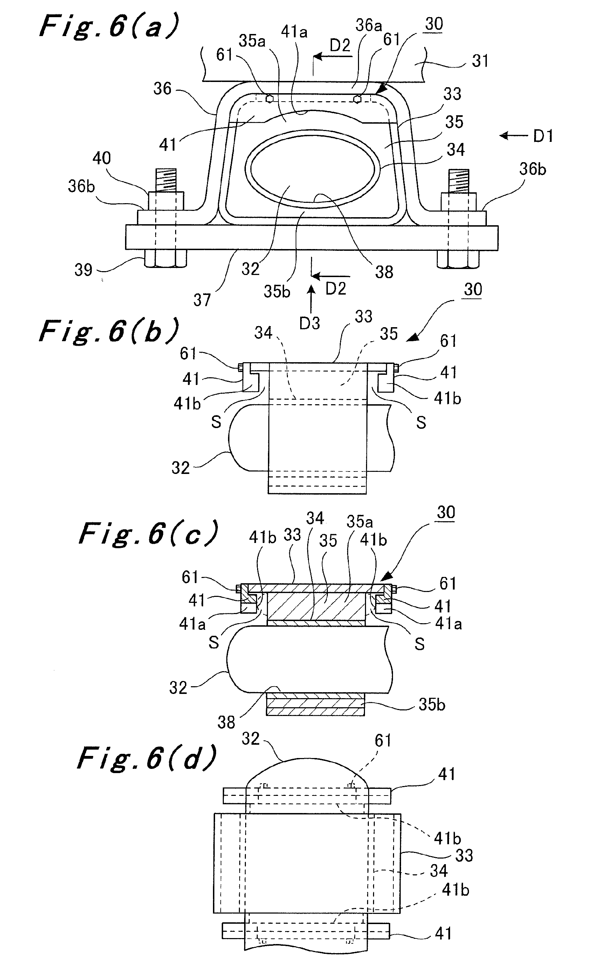

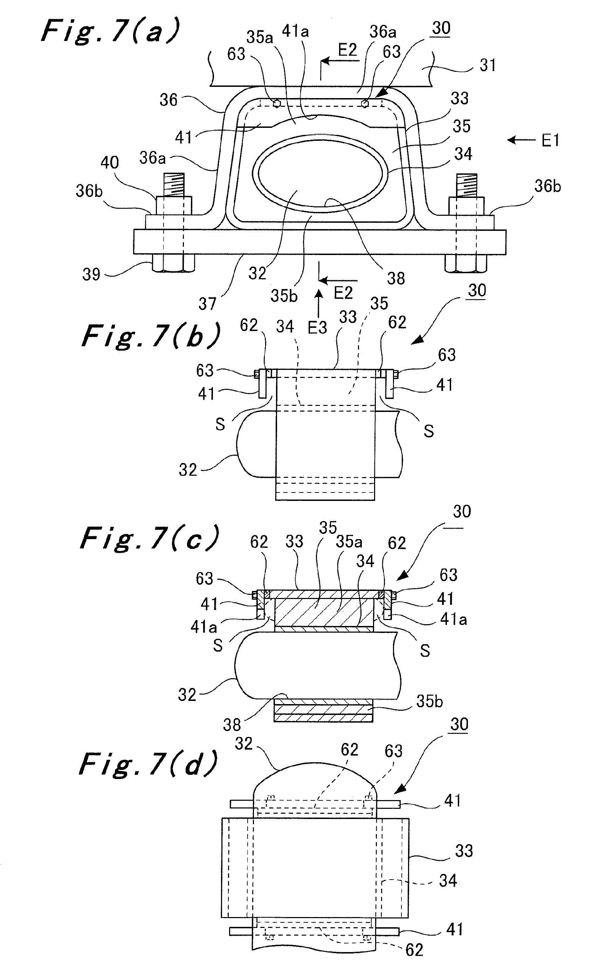

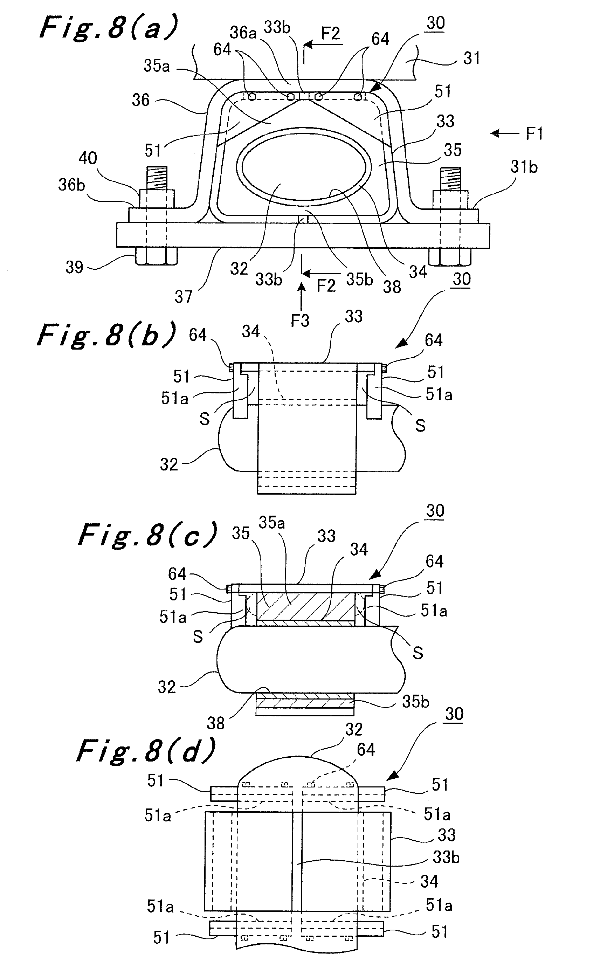

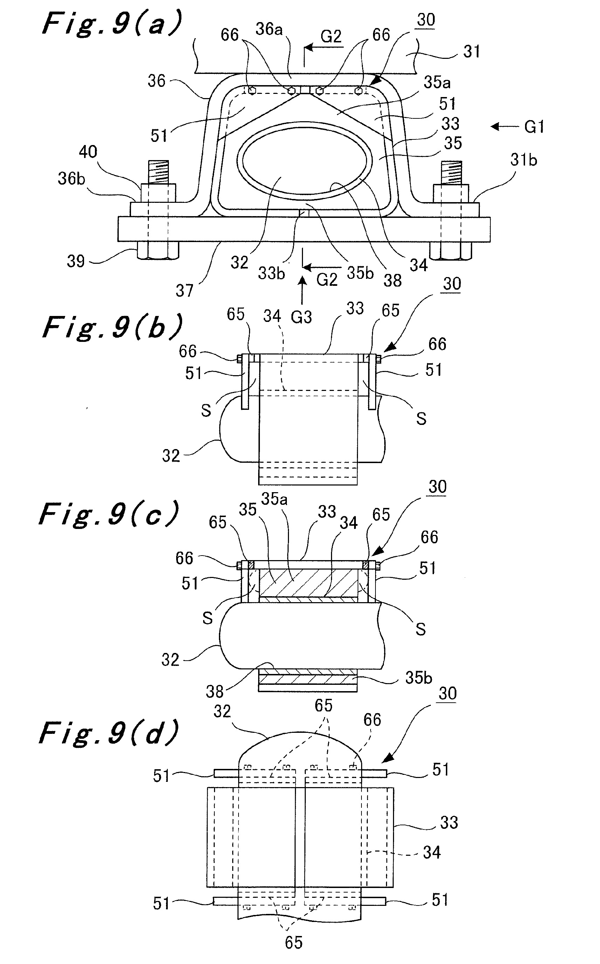

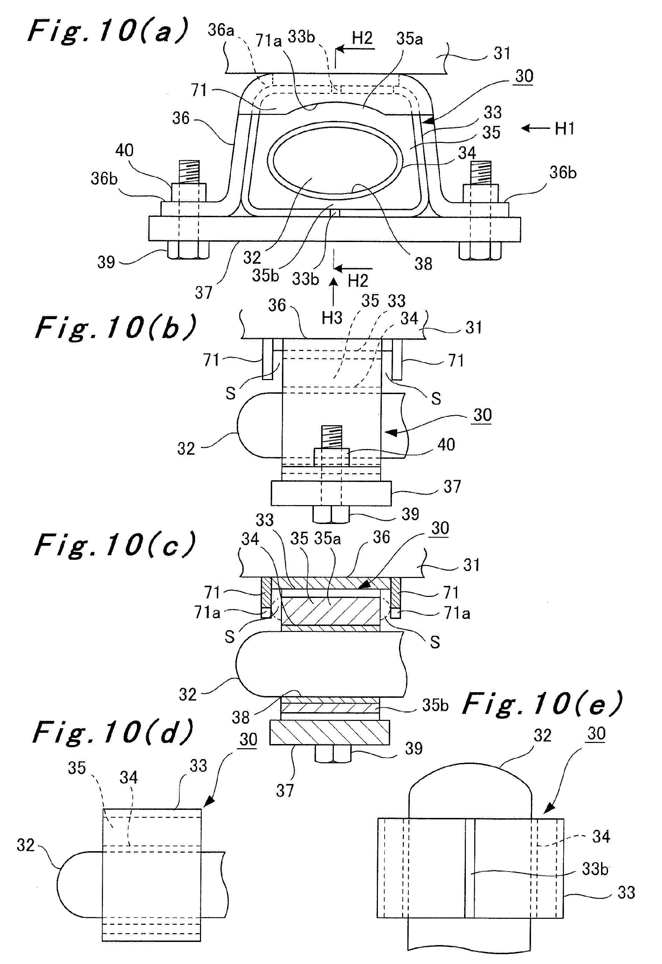

[Fig. 4] (a) is a front view showing an assembled mounting bush in the rear axle attachment structure; (b) is a side view of the mounting bush (a view in a direction of an arrow B1 of (a)); (c) is a cross-sectional view of the mounting bush (a cross-sectional view taken along a line B2-B2 as viewed in a direction of arrows B2 of (a)); and (d) is a bottom view of the mounting bush (a view in a direction of an arrow B3 of (a)). [Fig. 5] (a) is a front view showing an assembled mounting bush in the rear axle attachment structure of a forklift according to Embodiment 2 of the present invention; (b) is a side view of the mounting bush (a view in a direction of an arrow C1 of (a)); (c) is a cross-sectional view of the mounting bush (a cross-sectional view taken along a line C2-C2 as viewed in a direction of arrows C2 of (a)); and (d) is a bottom view of the mounting bush (a view in a direction of an arrow C3 of (a)). [Fig. 6] (a) is a front view showing an assembled mounting bush in the rear axle attachment structure of a forklift according to Embodiment 3 of the present invention; (b) is a side view of the mounting bush (a view in a direction of an arrow D1 of (a)); (c) is a cross-sectional view of the mounting bush (a cross-sectional view taken along a line D2-D2 as viewed in a direction of arrows D2 of (a)); and (d) is a bottom view of the mounting bush (a view in a direction of an arrow D3 of (a)). [Fig. 7] (a) is a front view showing an assembled mounting bush in the rear axle attachment structure of a forklift according to Embodiment 4 of the present invention; (b) is a side view of the mounting bush (a view in a direction of an arrow E1 of (a)); (c) is a cross-sectional view of the mounting bush (a cross-sectional view taken along a line E2-E2 as viewed in a direction of arrows E2 of (a)); and (d) is a bottom view of the mounting bush (a view in a direction of an arrow E3 of (a)). [Fig. 8] (a) is a front view showing an assembled mounting bush in the rear axle attachment structure of a forklift according to Embodiment 5 of the present invention; (b) is a side view of the mounting bush (a view in a direction of an arrow F1 of (a)); (c) is a cross-sectional view of the mounting bush (a cross-sectional view taken along a line F2-F2 as viewed in a direction of arrows F2 of (a)); and (d) is a bottom view of the mounting bush (a view in a direction of an arrow F3 of (a)). [Fig. 9] (a) is a front view showing an assembled mounting bush in the rear axle attachment structure of a forklift according to Embodiment 4 of the present invention; (b) is a side view of the mounting bush (a view in a direction of an arrow G1 of (a)); (c) is a cross-sectional view of the mounting bush (a cross-sectional view taken along a line G2-G2 as viewed in a direction of arrows G2 of (a)); and (d) is a bottom view of the mounting bush (a view in a direction of an arrow G3 of (a)). [Fig. 10] (a) is a front view of an assembled mounting bush in the rear axle attachment structure of a forklift according to Embodiment 7 of the present invention; (b) is a side view showing the assembled mounting bush (a view in a direction of an arrow H1 of (a)); (c) is a cross-sectional view showing the assembled mounting bush (a cross-sectional view taken along a line H2-H2 as viewed in a direction of arrows H2 of (a)); (d) is a side view of the mounting bush (a view in a direction of the arrow H1 of (a) ; and (e) is a bottom view of the mounting bush (a view in a direction of an arrow H3 of (a)).

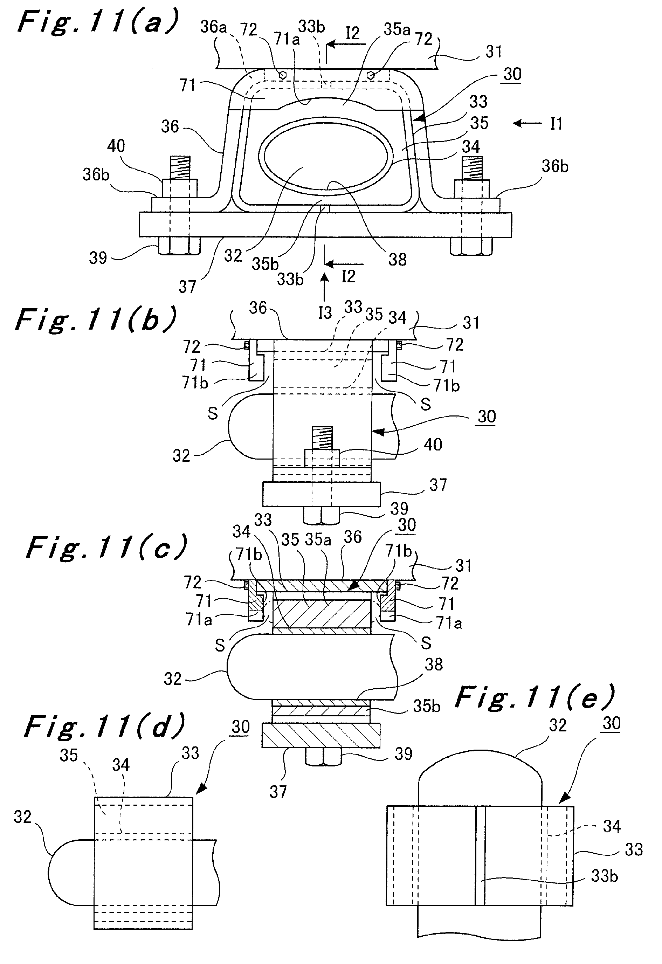

[Fig. 11] (a) is a front view showing an assembled mounting bush in a rear axle attachment structure of a forklift according to Embodiment 8 of the present invention; (b) is a side view showing the assembled mounting bush (a view in a direction of an arrow I1 of (a)); (c) is a cross-sectional view showing the assembled mounting bush (a cross-sectional view taken along a line I2-I2 as viewed in a direction of arrows I2 of (a)); (d) is a side view of the mounting bush (a view in a direction of the arrow I1 of (a)); and (e) is a bottom view of the mounting bush (a view in a direction of an arrow I3 of (a)).

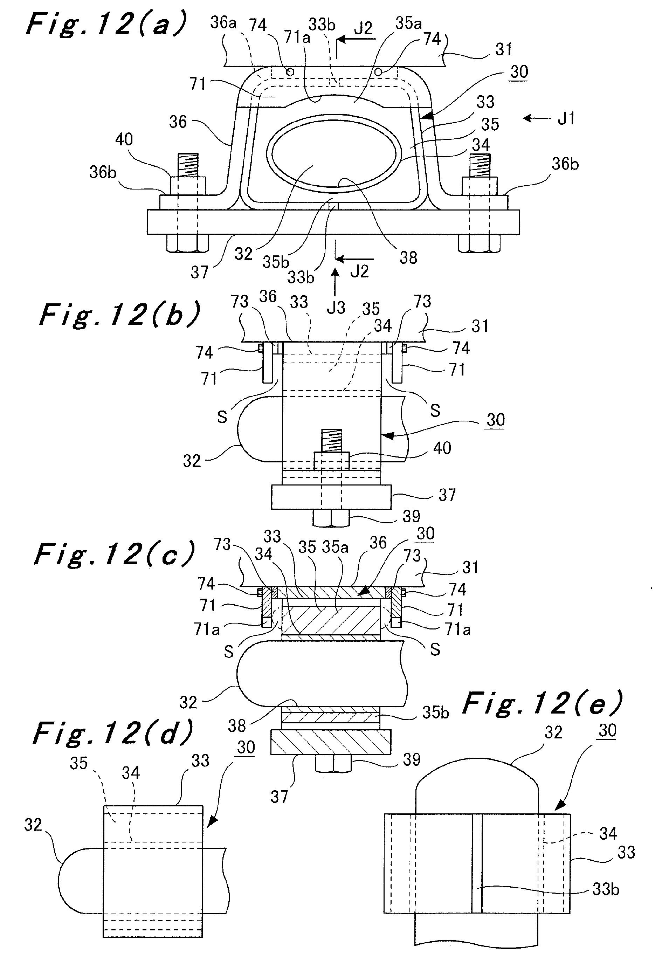

[Fig. 12] (a) is a front view showing an assembled mounting bush in a rear axle attachment structure of a forklift according to Embodiment 9 of the present invention; (b) is a side view showing the assembled mounting bush (a view in a direction of an arrow J1 of (a)); (c) is a cross-sectional view showing the assembled mounting bush (a cross-sectional view taken along a line J2-J2 as viewed in a direction of arrows J2 of (a)); (d) is a side view of the mounting bush (a view in a direction of the arrow J1 of (a)); and Fig. 12 (e) is a bottom view of the mounting bush (a view in a direction of an arrow J3 of Fig. 12(a)).
[Fig. 13] Fig. 13 is a perspective view of a rear axle attachment structure of a forklift according to Embodiment 10 of the present invention.
[Fig. 14] Fig. 14 is a front view of the rear axle attachment structure.
[Fig. 15] (a) is an enlarged perspective view of a stopper in the rear axle attachment structure; (b) is a front view of the stopper; and (c) is a cross-sectional view of the stopper.
[Fig. 16] (a) is a front view showing an assembled mounting bush in a rear axle attachment structure of a forklift according to Embodiment 12 of the present invention; (b) is a side view showing the mounting bush (a view in a direction of an arrow K1 of (a)); (c) is a cross-sectional view showing the mounting bush (a cross-sectional view taken along a line K2-K2 as viewed in a direction of arrows K2 of (a)); and (d) is a bottom view of the mounting bush (a view in a direction of an arrow K3 of (a)) .
[Fig. 17] (a) is a front view showing an assembled mounting bush in a rear axle attachment structure of a forklift according to Embodiment 13 of the present invention; and (b) is an enlarged view of part L of (a).
[Fig. 18] Fig. 18 is a cross-sectional view showing an assembled mounting bush in a rear axle attachment structure of a forklift according to Embodiment 14 of the present invention.
[Fig. 19] Fig. 19 is a cross-sectional view showing an assembled mounting bush in a rear axle attachment structure of a forklift according to Embodiment 15 of the present invention.
[Fig. 20] Fig. 20 is a cross-sectional view showing an assembled mounting bush in a rear axle attachment structure of a forklift according to Embodiment 16 of the present invention.
[Fig. 21] Fig. 21 is a front view showing an assembled mounting bush in a rear axle attachment structure of a forklift according to Embodiment 17 of the present invention.
[Fig. 22] (a) is a front view showing a conventional rear axle attachment structure of a forklift including a rubber-made mounting bush; and Fig. 22 (b) is a cross-sectional view of Fig. 22 (a) taken along a line A-A as viewed in a direction of arrows A.

### EXPLANATION OF REFERENCE NUMERALS

21... FORKLIFT, 22... FORK, 23... MAST, 24... COUNTERWEIGHT, 25... FRONT AXLE, 26... FRONT WHEEL, 27... REAR WHEEL, 28... REAR AXLE, 30... MOUNTING BUSH, 31... BODY FRAME, 32... MOUNTING SHAFT, 33... OUTER FRAME, 33A... CORNER, 33B... SEPARATING PORTION, 34... INNER FRAME, 35... RUBBER, 35a... UPPER PORTION, 35b... LOWER PORTION, 35c... PROTRUDING PORTION, 36... ATTACHMENT JIG, 36a... BODY, 36b... FLANGE, 37... ATTACHMENT JIG, 38... MOUNTING HOLE, 39... BOLT, 40... NUT, 41... PROTRUSION AMOUNT CONTROL PLATE, 41a... RECESSED PORTION, 41b... PROTRUSION AMOUNT CONTROL PORTION, 51... PROTRUSION AMOUNT CONTROL PLATE, 51a... PROTRUSION AMOUNT CONTROL PORTION, 61... BOLT, 62... SPACER, 63, 64... BOLT, 65... SPACER, 66... BOLT, 71... PROTRUSION AMOUNT CONTROL PLATE, 71a... RECESSED PORTION, 71b... PROTRUSION AMOUNT CONTROL PORTION, 72... BOLT, 73... SPACER, 74... BOLT, 80... MOUNTING BUSH, 81... OUTER FRAME, 82... INNER FRAME, 83... RUBBER, 84... MOUNTING HOLE, 85... MOUNTING SHAFT, 86... STOPPER, 87... COVER, 87a... TOP PLATE, 88... RUBBER, 90... SUPPORTING ROD, 91... FIRST MOUNTING BUSH, 92... SECOND MOUNTING BUSH, 93... OUTER FRAME, 94... INNER FRAME, 95... RUBBER, 96... TOP PLATE, 97... BOTTOM PLATE, 98... RUBBER, 99... ATTACHMENT JIG, 99a... BODY, 99b... FLANGE, 100... ATTACHMENT JIG, 101... MOUNTING HOLE, 102... BOLT, 103... NUT, 111... WIRE, 112... CONNECTION CABLE, 113... DISCONNECTION DETECTION DEVICE, 121... CONTACT SENSOR, 131... PRESSURE SENSOR, 132... SUPPORTING PLATE, 141... PROXIMITY SENSOR, S... GAP

### BEST MODES FOR CARRYING OUT THE INVENTION

A description is given of embodiments of the present invention below with reference to the drawings.

### <Embodiment 1>

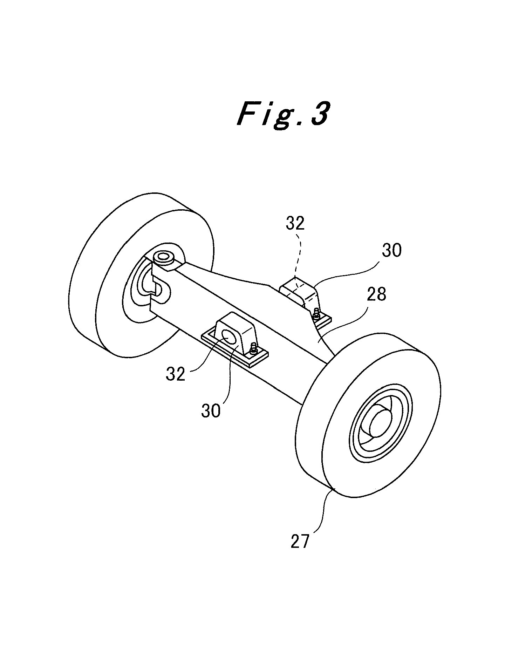

Fig. 1 is a perspective view of a forklift according to Embodiment 1 of the present invention; Fig. 2 is a side view of the forklift; and Fig. 3 is an enlarged perspective view of a rear axle attachment structure of the forklift. Fig. 4(a) is a front view showing an assembled mounting bush in the rear axle attachment structure; Fig. 4(b) is a side view of the mounting bush (a view in a direction of an arrow B1 of Fig. 4(a)); Fig. 4(c) is a cross-sectional view of the mounting bush (a cross-sectional view taken along a line B2-B2 as viewed in a direction of arrows B2 of Fig. 4(a)); and Fig. 4(d) is a bottom view of the mounting bush (a view in a direction of an arrow B3 of Fig. 4(a)).

For convenience of explanation, Figs. 1 and 2 are transparent views showing only a part around an axle with solid lines and showing other parts with dashed-dotted lines.

As shown in Figs. 1 and 2, a forklift 21 (hereinafter, also referred to as a vehicle) is equipped with a fork 22, a mast 23 for moving up and down the fork 22, and the like at its front. At the rear of the fork 22, a counterweight 24 is mounted. The counterweight 24 is for maintaining a weight balance of the vehicle between the front and rear when carrying a transport material on the fork 22 to lift and lower. The forklift 21 includes front wheels 26 and a front axle 25 supporting the front wheels 26 in the front of the vehicle. The forklift 21 also includes rear wheels 27 and a rear axle 28 supporting the rear wheels 27 in the rear of the vehicle. The front and rear wheels 26 and 27 are driving wheels and steering wheels, respectively.

The rear axle 28 is attached to a vehicle body (a body frame 31) of the forklift 21 through mounting bushes 30, which are made of rubber and provided on vehicle front and rear sides of the rear axle 28.

Hereinafter, with reference to Figs. 3 and 4, the attachment structure of the rear axle 28 using the rubber-made mounting bushes 30 will be described in detail. Fig. 4 shows only the assembled state and structure of the mounting bush 30 on the front side, but the assembled state and structure of the mounting bush 30 on the rear side are the same as those shown in Fig. 4.

As shown in Fig. 3, mounting shafts 32 protruding from the front and rear (vehicle front and rear sides) of the rear axle 28. The front mounting shaft 32 horizontally extends towards the vehicle front, and the rear mounting shaft 32 horizontally extends towards the vehicle rear.

As shown in Figs. 4(a) to 4(d), the mounting bush 30 includes rubber 35 between a tubular outer frame 33 and a tubular inner frame 34. The outer frame 33 is made of metal and is trapezoidal in the front view. The inner frame 34 is made of metal and is elliptic in the front view. The rubber 35 is formed by, for example, pouring a heated rubber material into a space between the outer and inner frames 33 and 34, and adheres to the inner surface of the outer frame 33 and the outer surface of the inner frame 34.

The mounting bush 30 is attached to the vehicle body (body frame 31) of the forklift 21 using attachment jigs 36 and 37. One of the mounting shafts 32 is inserted into a mounting hole 38 within the inner frame 34.

The attachment jig 36 includes: a body 36a which is made of metal and is trapezoidal in the front view; and flanges 36b horizontally extending on both sides of the body 36a. The body 36a is fixed to the body frame 31 by fixation means such as welding so that the attachment jig 36 is integrated with the body frame 31. The attachment jig 37 is made of metal and is plate-shaped.

The mounting bush 30 is fit in the body 36a of the attachment jig 36. The attachment jig 37 is fastened to the flanges 36b of the attachment jig 36 with bolts 39 and nuts 40 to support the bottom surface of the mounting bush 30. The attachment jig 37 surrounds the mounting bush 30 together with the attachment jig 36 supporting the upper and side surfaces of the mounting bush 30.

The means for attaching the mounting bush 30 to the vehicle body of the forklift 21 is not necessarily limited to using the attachment jigs 36 and 37. For example, the outer frame 33 of the mounting bush 30 may be attached directly to the vehicle body (body frame) by welding or the like.

The mounting shaft 32 and the mounting hole 38 are elliptical in the front view. This prevents the mounting shaft 32 from freely rotating when the rear axle 28 swings (rolls) around the mounting shaft 32. The mounting bush 30 can therefore receive not only vertical load but also torsional load due to such swinging. In this case, the mounting shaft and the mounting hole are not limited to being elliptical and may be rectangular (square or oblong).

In Embodiment 1, the outer frame 33 of the mounting bush 30 is provided with protrusion amount control plates 41. Each of the protrusion amount control plates 41 is opposed to a portion 35a of the rubber 35 of the mounting bush 30, the portion 35a being portion above the inner frame 34. The protrusion amount control plates 41 function as protrusion amount control means for controlling an amount of a protrusion of the upper portion 35a protruding from between the outer frame 33 and inner frame 34 in the vehicle front and rear directions. The protrusion amount control plates 41 are made of metal and are trapezoidal. The protrusion amount control plates 41 are fixed to the front and rear (the vehicle's front and rear sides) of upper part of the outer frame 33, respectively, by fixation means such as welding. Between each protrusion amount control plate 41 and the rubber 35, a gap S with a predetermined width is provided.

The reason for providing the gap S is because in the absence of the gap S, the protrusions of the upper portion 35a of the rubber 35 are completely restricted by the protrusion amount control plates 41. Accordingly, impact force (load) that the forklift 21 receives while running on rough part of a road surface cannot be absorbed by deformation of the rubber 35. On the other hand, if the gap S is extremely wide, the protrusion amount control plates 41 have no effect on controlling the amounts of protrusions of the upper portion 35a of the rubber 35. Accordingly, the specific width of each gap S should be properly set while considering the balance between the effect of the rubber 35 on absorbing the impact force (load) and the effect of the protrusion amount control plates 41 on controlling the amount of protrusions.

At the bottom end of each protrusion amount control plate 41, a recessed portion 41a having a shape following the outer circumference of the mounting shaft 32 is formed.

As described above, according to the rear axle attachment structure of Embodiment 1, the attachment structure is characterized by including, as the protrusion amount control means, the protrusion amount control plates 41 provided at the front and rear of upper part of the outer frame 33, respectively, with the gap S between the rubber 35 and each protrusion amount control plate 41. The protrusion amount control plates 41 control the amount of protrusion of the portions 35a of the rubber 35, the portions 35a being portions above the inner frame 34 and protruding from between the outer and inner frames 33 and 34 in the vehicle front and rear directions. Accordingly, the amount of each protrusion of the upper portion 35a of the rubber 35 is controlled by the protrusion amount control plate 41, so that the deterioration (fatigue) of the rubber 35 can be controlled. It is therefore possible to increase the lifetime of the mounting bushes 30 and reduce the frequency of changing the mounting bushes 30. Moreover, such effects can be implemented at low cost. Furthermore, since the protrusion amount control plates 41 are provided on the mounting bush 30, the work of changing the mounting bushes 30 can be performed by changing only the mounting bushes 30.

According to the rear axle attachment structure of Embodiment 1, the attachment structure is characterized in that the recessed portion 41a having a shape following the outer circumference of the mounting shaft 32 is formed at the bottom end of each protrusion amount control plate 41. It is therefore possible to efficiently control the amount of protrusion and prevent the mounting shaft 32 from coming into contact with the protrusion amount control plate 41 in a range where the mounting shaft 32 normally moves up and down. Moreover, even if the mounting shaft 32 moves up as the rubber 35 deteriorates, the mounting shaft 32 comes into contact with the protrusion amount control plate 41 and can be prevented from coming into direct contact with the body frame 31.

### <Embodiment 2>

Fig. 5(a) is a front view showing an assembled mounting bush in a rear axle attachment structure of a forklift according to Embodiment 2 of the present invention; Fig. 5(b) is a side view of the mounting bush (a view in a direction of an arrow C1 of Fig. 5(a)); Fig. 5(c) is a cross-sectional view of the mounting bush (a cross-sectional view taken along a line C2-C2 as viewed in a direction of arrows C2 of Fig. 5(a)); and Fig. 5(d) is a bottom view of the mounting bush (a view in a direction of an arrow C3 of Fig. 5(a)).

The entire constitution of the forklift and the constitution of the rear axle are the same as those of Embodiment 1 above (see Figs. 1 to 3), and the drawings and description thereof are omitted. As for the constitution shown in Fig. 5, same parts as those of Embodiment 1 (see Fig. 4) are denoted with same reference numerals and the description thereof are omitted.

As shown in Figs. 5(a) to 5(d), in Embodiment 2, the outer frame 33 of the mounting bush 30 is provided with protrusion amount control plates 51. Similar to the protrusion amount control plates 41 of Embodiment 1 above, each of these protrusion amount control plates 51 is opposed to the upper portion 35a of the rubber 35 of the mounting bush 30, the portion 35a being portion above the inner frame 34. The protrusion amount control plates 51 function as the protrusion amount control means for controlling an amount of protrusion of the upper portion 35a protruding from between the outer and inner frames 33 and 34 towards the front and rear of the vehicle.

The protrusion amount control plates 51 are made of metal and are triangular. The protrusion amount control plates 51 are fixed to the front and rear (the vehicle front and rear sides) of both upper corners 33a of the trapezoidal outer frame 33, respectively, by fixation means such as welding. As shown in Fig. 5(a), sides of the right and left protrusion amount control plates 51 form a chevron. Between each of the protrusion amount control plates 41 and the rubber 35, a gap S with a predetermined width is provided. The reason for providing the gap S and the settings of the specific width of the gap S are the same as those of Embodiment 1 above.

In Embodiment 2, the outer frame 33 of the mounting bush 30 is divided into two blocks of right and left at the central separating portion 33b. Accordingly, the mounting bush 30 of Embodiment 2 is fitted into the body 36a of the attachment jig 36 in such manner as to be pressed upward from below, similar to the conventional mounting bush 1 (see Fig. 22). The gap of the separating portion 33a of the outer frame 33 is narrowed at this time, and the rubber 35 is therefore always subjected to compression load. Accordingly, the mounting bush 30 can be reliably fixed to the attachment jig 36.

The other constitution of the rear axle attachment structure of Embodiment 2 is the same as that of Embodiment 1 above (see Fig. 4).

As described above, according to the rear axle attachment structure of Embodiment 2, the attachment structure is characterized by including, as the protrusion amount control means, the triangular protrusion amount control plates 51 provided on the front and rear of both upper corners of the outer frame 33, respectively, with the gap S between the rubber 35 and each protrusion amount control plate 51. The protrusion amount control plates 51 control the amount of protrusion of the portions 35a of the rubber 35, the portions 35a being portions above the inner frame 34 and protruding from between the outer and inner frames 33 and 34 in the vehicle front and rear directions. Accordingly, the amounts of protrusions of the upper portions 35a of the rubber 35 are controlled by the protrusion amount control plates 51, so that the deterioration (fatigue) of the rubber 35 can be controlled. It is therefore possible to increase the lifetime of the mounting bushes 30 and reduce the frequency of changing the mounting bushes 30. Moreover, such effects can be implemented at low cost.

Since the protrusion amount control plates 51 are provided on the mounting bush 30, the work of changing the mounting bushes 30 can be performed by changing only the mounting bushes 30. Furthermore, it is possible to efficiently control the protrusions of the rubber 35 around the both upper corners of the outer frame 33, where relatively large amounts of rubber is included and the protruding amount of rubber is large. Moreover, the outer frame 33 of the mounting bush 30 can be divided at the central separating portion 33b into two blocks of right and left like the conventional one. Accordingly, the mounting bush 30 can be easily and reliably assembled. Still moreover, since the sides of the right and left protrusion amount control plates 51 form a chevron, the mounting shaft 32 can be prevented from coming into contact with the protrusion amount control plates 51 in the range where the mounting shaft 32 normally moves up and down. Moreover, even if the mounting shaft 32 moves up as the rubber 35 deteriorates, the mounting shaft 32 comes into contact with the protrusion amount control plates 51 and can be prevented from coming into direct contact with the body frame 31.

### <Embodiment 3>

Fig. 6(a) is a front view showing an assembled mounting bush in a rear axle attachment structure of a forklift according to Embodiment 3 of the present invention; Fig. 6(b) is a side view of the mounting bush (a view in a direction of an arrow D1 of Fig. 6(a)); Fig. 6(c) is a cross-sectional view of the mounting bush (a cross-sectional view taken along a line D2-D2 as viewed in a direction of arrows D2 of Fig. 6(a)); and Fig. 6(d) is a bottom view of the mounting bush (a view in a direction of an arrow D3 of Fig. 6(a)).

The entire constitution of the forklift and the constitution of the rear axle are the same as those of Embodiment 1 above (see Figs. 1 to 3), and the drawings and description thereof are omitted. As for the constitution shown in Fig. 6, same parts as those of Embodiment 1 (see Fig. 4) are denoted with same reference numerals and the description thereof are omitted.

As shown in Figs. 6(a) to 6(d), as the protrusion amount control plates 41 of Embodiment 3, a plural types protrusion amount control plates respectively including protrusion amount control portions 41b are previously prepared. Each of the protrusion amount control portions 41b differ in thickness and is opposed to the upper portion 35a of the rubber 35 (Fig. 6 shows an example thereof). One type selected from the plural types of protrusion amount control plates 41 is detachably attached to the outer frame 33 of the mounting bush 30 by bolts 61. In this case, the width of the gap S between each protrusion amount control plate 41 and the rubber 35 can be adjusted according to the thickness of the selected protrusion amount control portion 41b. Specifically, in order to increase the width of each gap S, the protrusion amount control plate 41 whose protrusion amount control portion 41b is thin should be selected and attached to the outer frame 33. In order to reduce the width of each gap S, the protrusion amount control plate 41 whose protrusion amount control portion 41b is thick should be selected and attached to the outer frame 33.

The other constitution of the rear axle attachment structure of Embodiment 3 is the same as that of Embodiment 1 above (see Fig. 4).

As described above, according to the rear axle attachment structure of Embodiment 3, the same effects as those of Embodiment 1 above can be obtained. Moreover, the attachment structure is characterized in that, as the protrusion amount control plates 41 of Embodiment 3, the plural types of protrusion amount control plates 41 including the protrusion amount control portions 41b with different thickness are prepared, and one type selected from the plural types of protrusion amount control plates 41 are detachably attached to the outer frame 33 by the bolts 61. Accordingly, each protrusion amount control plate 41 attached to the mounting bush 30 is arbitrarily selected from the plural types of protrusion amount control plates 41 including the protrusion amount control portions 41b with different thickness, thus allowing the width of each gap S to be arbitrarily managed (adjusted). The spring constant of the rubber 35 can be therefore arbitrarily selected.

### <Embodiment 4>

Fig. 7(a) is a front view showing an assembled mounting bush in a rear axle attachment structure of a forklift according to Embodiment 4 of the present invention; Fig. 7(b) is a side view of the mounting bush (a view in a direction of an arrow E1 of Fig. 7(a)); Fig. 7(c) is a cross-sectional view of the mounting bush (a cross-sectional view taken along a line E2-E2 as viewed in a direction of arrows E2 of Fig. 7(a)); and Fig. 7(d) is a bottom view of the mounting bush (a view in a direction of an arrow E3 of Fig. 7(a)).

The entire constitution of the forklift and the constitution of the rear axle are the same as those of Embodiment 1 above (see Figs. 1 to 3), and the drawings and description thereof are omitted. As for the constitution shown in Fig. 7, same parts as those of Embodiment 1 (see Fig. 4) are denoted with same reference numerals and the description thereof are omitted.

As shown in Figs. 7(a) to 7(d), the protrusion amount control plates 41 of Embodiment 4 are detachably attached to the outer frame 33 by bolts 63 with spacers 62 interposed therebetween. Plural types of spacers 62 each having different thickness are previously prepared. One type selected from the plural types of spacers 62 is used for attachment of the protrusion amount control plates 41. In this case, the width of the gap S between each protrusion amount control plate 41 and the rubber 35 can be adjusted according to the thickness of the selected spacer 62. Specifically, in order to increase the width of each gap S, thick one of the spacers 62 should be used for attachment of the protrusion amount control plate 41. In order to reduce the width of each gap S, thin one of the spacers 62 should be used for attachment of the protrusion amount control plate 41.

The other constitution of the rear axle attachment structure of Embodiment 4 is the same as that of above Embodiment 1 (see Fig. 4).

As described above, according to the rear axle attachment structure of Embodiment 4, the same effects as those of Embodiment 1 above can be obtained. Moreover, the attachment structure is characterized in that the plural types of spacers 62 each having different thickness are prepared, and each protrusion amount control plate 41 is detachably attached to the outer frame 33 by the bolts 63 with any one type of the spacers 62 interposed therebetween. Accordingly, each spacer 62 attached to the mounting bush 30 is arbitrarily selected from the plural types of spacers 62 with different thickness, thus allowing the width of each gap S to be arbitrarily managed (adjusted). The spring constant of the rubber 35 can be therefore arbitrarily selected.

### <Embodiment 5>

Fig. 8(a) is a front view showing an assembled mounting bush in a rear axle attachment structure of a forklift according to Embodiment 5 of the present invention; Fig. 8(b) is a side view of the mounting bush (a view in a direction of an arrow F1 of Fig. 8(a)); Fig. 8(c) is a cross-sectional view of the mounting bush (a cross-sectional view taken along a line F2-F2 as viewed in a direction of arrows F2 of Fig. 8(a)); and Fig. 8(d) is a bottom view of the mounting bush (a view in a direction of an arrow F3 of Fig. 8(a)).

The entire constitution of the forklift and the constitution of the rear axle are the same as those of aforementioned Embodiment 1 (see Figs. 1 to 3), and the drawings and description thereof are omitted. As for the constitution shown in Fig. 8, same parts as those of Embodiment 2 above (see Fig. 5) are denoted with same reference numerals and the description thereof are omitted.

As shown in Figs. 8(a) to 8(d), as protrusion amount control plates 51 of Embodiment 5, a plural protrusion amount control plates including protrusion amount control portions 51a are prepared. Each of the protrusion amount control portions 51a differ in thickness and is opposed to the upper portion 35a of the rubber 35 (Fig. 8 shows an example thereof). One type selected from the plural types of protrusion amount control plates 51 is detachably attached to the outer frame 33 of the mounting bush 30 by means of bolts 64. In this case, the width of the gap S between each protrusion amount control plate 51 and the rubber 35 can be adjusted according to the thickness of the protrusion amount control portion 51a. Specifically, in order to increase the width of each gap S, the protrusion amount control plates 51 whose protrusion amount control portion 51a is thin should be selected and attached to the outer frame 33. In order to reduce the width of each gap S, the protrusion amount control plate 51 whose protrusion amount control portion 51a is thick should be selected and attached to the outer frame 33.

The other constitution of the rear axle attachment structure of Embodiment 5 is the same as that of Embodiment 2 above (see Fig. 5).

As described above, according to the rear axle attachment structure of Embodiment 5, the same effects as those of Embodiment 2 above can be obtained. Moreover, the attachment structure is characterized in that, as the protrusion amount control plates 51 of Embodiment 3, the plural types of protrusion amount control plates 51 including the protrusion amount control portions 51a with different thickness are prepared, and one type selected from the plural types of protrusion amount control plates 41 are detachably attached to the outer frame 33 by the bolts 64. Accordingly, each protrusion amount control plate 51 attached to the mounting bush 30 is arbitrarily selected from the plural types of protrusion amount control plates 51 including the protrusion amount control portions 51a with different thickness, thus allowing the width of gap S to be arbitrarily managed (adjusted). The spring constant of the rubber 35 can be therefore arbitrarily selected.

### <Embodiment 6>

Fig. 9(a) is a front view showing an assembled mounting bush in a rear axle attachment structure of a forklift according to Embodiment 6 of the present invention; Fig. 9(b) is a side view of the mounting bush (a view in a direction of an arrow G1 of Fig. 9(a)); Fig. 9(c) is a cross-sectional view of the mounting bush (a cross-sectional view taken along a line G2-G2 as viewed in a direction of arrows G2 of Fig. 9(a)); and Fig. 9(d) is a bottom view of the mounting bush (a view in a direction of an arrow G3 of Fig. 9(a)).

The entire constitution of the forklift and the constitution of the rear axle are the same as those of Embodiment 1 above (see Figs. 1 to 3), and the drawings and description thereof are omitted. As for the constitution shown in Fig. 9, same parts as those of Embodiment 2 above (see Fig. 5) are denoted with same reference numerals and the description thereof are omitted.

As shown in Figs. 9(a) to 9(d), the protrusion amount control plates 51 of Embodiment 6 are detachably attached to the outer frame 33 by bolts 66 with spacers 65 interposed therebetween. The plural spacers 65 each having different thickness are previously prepared. One type selected from the plural types of spacers 65 is used for attachment of the protrusion amount control plates 51. In this case, the width of the gap S between each protrusion amount control plate 51 and the rubber 35 can be adjusted according to the thickness of the selected spacer 65. Specifically, in order to increase the width of each gap S, thick one of the spacers 65 should be used for attachment of the protrusion amount control plate 51. In order to reduce the width of each gap S, thin one of the spacers 65 should be used for attachment of the protrusion amount control plate 51.

The other constitution of the rear axle attachment structure of Embodiment 6 is the same as that of Embodiment 2 above (see Fig. 5).

As described above, according to the rear axle attachment structure of Embodiment 6, the same effects as those of Embodiment 2 above can be obtained. Moreover, the attachment structure is characterized in that the plural spacers 65 each having different thickness are prepared, and each protrusion amount control plate 51 is detachably attached to the outer frame 33 by the bolts 66 with one of the spacers 62 interposed therebetween. Accordingly, each spacer 66 attached to the mounting bush 30 is arbitrarily selected from the plural types of spacers 65 with different thickness, thus allowing the width of gap S to be arbitrarily managed (adjusted). The spring constant of the rubber 35 can be therefore arbitrarily selected.

### <Embodiment 7>

Fig. 10(a) is a front view of an assembled mounting bush in a rear axle attachment structure of a forklift according to Embodiment 7 of the present invention; Fig. 10(b) is a side view showing the assembled mounting bush (a view in a direction of an arrow H1 of Fig. 10(a)); Fig. 10(c) is a cross-sectional view showing the assembled mounting bush (a cross-sectional view taken along a line H2-H2 as viewed in a direction of arrows H2 of Fig. 10(a)); Fig. 10(d) is a side view of the mounting bush (a view in a direction of the arrow H1 of Fig. 10(a); and Fig. 10(e) is a bottom view of the mounting bush (a view in a direction of an arrow H3 of Fig. 10(a)).

The entire constitution of the forklift and the constitution of the rear axle are the same as those of Embodiment 1 above (see Figs. 1 to 3), and the drawings and description thereof are omitted. As for the constitution shown in Fig. 10, same parts as those of Embodiment 1 above (see Fig. 4) are denoted with same reference numerals and the description thereof are omitted.

As shown in Figs. 10(a) to 10(e), in Embodiment 7, an attachment jig 36 is provided with protrusion amount control plates 71. Similar to the protrusion amount control plates 41 of Embodiment 1 above, each of these protrusion amount control plates 71 is opposed to the upper portion 35a of the rubber 35 of the mounting bush 30, the portion 35a being above the inner frame 34. The protrusion amount control plates 71 function as the protrusion control amount means for controlling the amount of protrusion of the upper portion 35a protruding from between the outer and inner frames 33 and 34 in the vehicle front and rear directions.

The protrusion amount control plates 71 are made of metal and are trapezoidal. The protrusion amount control plates 71 are fixed to the front and rear (the vehicle front and rear sides) of the mounting bush 30, respectively, by fixation means such as welding. Between each of the protrusion amount control plates 71 and the rubber 35, a gap S of a predetermined width is provided. The reason for providing the gaps S and the settings of the specific width of each gap S are the same as those of Embodiment 1 above.

In Embodiment 7, the outer frame 33 of the mounting bush 30 is divided into two blocks of right and left at the central separating portion 33b. Accordingly, the mounting bush 30 of Embodiment 7 is fitted into the body 36a of the attachment jig 36 in such a manner as to be pressed upward from below, similar to the conventional mounting bush 1 (see Fig. 22). The width of the separating portion 33a of the outer frame 33 is narrowed at this time, and the rubber 35 is therefore always subjected to compression load. Accordingly, the mounting bush 30 can be reliably fixed to the attachment jig 36.

At the bottom end of each protrusion amount control plate 71, a recessed portion 71a having a shape following the outer circumference of the mounting shaft 32 is provided.

The other constitution of the rear axle attachment structure of Embodiment 7 is the same as that of Embodiment 1 above (see Fig. 4).

As described above, according to the rear axle attachment structure of Embodiment 7, the attachment structure is characterized by including, as the protrusion amount control means, the protrusion amount control plates 71 provided on the vehicle body with the gap S between each protrusion amount control plate 71 and the rubber 35. The protrusion amount control plates 71 control the amount of protrusions of the portion 35a of the rubber 35, the portions 35a being portions above the inner frame 34 and protruding from between the outer and inner frames 33 and 34 towards the front and rear of the vehicle. Accordingly, the amounts of protrusions of the upper portions 35a of the rubber 35 are controlled by the protrusion amount control plates 71, so that the deterioration (fatigue) of the rubber 35 can be controlled. It is therefore possible to increase the lifetime of the mounting bushes 30 and reduce the frequency of changing the mounting bushes 30. Such effects can be implemented at low cost. Moreover, the outer frame 33 of the mounting bush 30 can be divided at the central separating portion 33b into two blocks of right and left like the conventional one. The mounting bush 30 can be therefore easily and reliably assembled. Furthermore, the protrusion amount control plates 71 can be provided at arbitrary places of the vehicle body of the forklift. Therefore the conventional mounting bushes can be used as the mounting bushes 30.

According to the rear axle attachment structure of Embodiment 7, the attachment structure is characterized in that the recessed portion 71a with a shape following the outer circumference of the mounting shaft 32 is formed at the bottom end of each protrusion amount control plate 71. It is therefore possible to efficiently control the amount of protrusion and prevent the mounting shaft 32 from coming into contact with the protrusion amount control plate 71 in a range where the mounting shaft 32 normally moves up and down. Moreover, even if the mounting shaft 32 moves up as the rubber 35 deteriorates, the mounting shaft 32 comes into contact with the protrusion amount control plate 71 and therefore can be prevented from coming into direct contact with the body frame 31.

### <Embodiment 8>

Fig. 11(a) is a front view showing an assembled mounting bush in a rear axle attachment structure of a forklift according to Embodiment 8 of the present invention; Fig. 11(b) is a side view showing the assembled mounting bush (a view in a direction of an arrow I1 of Fig. 11(a)); Fig. 11(c) is a cross-sectional view showing the assembled mounting bush (a cross-sectional view taken along a line I2-I2 as viewed in a direction of arrows I2 of Fig. 11(a)); Fig. 11(d) is a side view of the mounting bush (a view in a direction of the arrow I1 of Fig. 11(a)); and Fig. 11(e) is a bottom view of the mounting bush (a view in a direction of an arrow I3 of Fig. 11(a)).

The entire constitution of the forklift and the constitution of the rear axle are the same as those of aforementioned Embodiment 1 (see Figs. 1 to 3), and the drawings and description thereof are omitted. As for the constitution shown in Fig. 11, same parts as those of Embodiment 7 above (see Fig. 10) are denoted with same reference numerals and the description thereof are omitted.

As shown in Figs. 11(a) to 11(e), as the protrusion amount control plates 71 of Embodiment 8, a plural protrusion amount control plates respectively including protrusion amount control portions 71b are previously prepared. Each of the protrusion amount control portions 71b differ in thickness and is opposed to the upper portion 35a of the rubber 35 (Fig. 11 shows an example of the same). One type selected from the plural types of protrusion amount control plates 71 is detachably attached to the attachment jig 36 of the mounting bush 30 by bolts 72. In this case, the width of the gap S between each protrusion amount control plate 71 and the rubber 35 can be adjusted according to the thickness of the protrusion amount control portions 71b. Specifically, in order to increase the width of each gap S, the protrusion amount control plate 71 whose protrusion amount control portion 71b is thin should be selected and attached to the attachment jig 36. In order to reduce the width of each gap S, the protrusion amount control plate 71 whose protrusion amount control portion 71b is thick should be selected and attached to the attachment jig 36.

The other constitution of the rear axle attachment structure of Embodiment 8 is the same as that of Embodiment 7 above (see Fig. 10).

As described above, according to the rear axle attachment structure of Embodiment 8, the same effects as those of Embodiment 7 can be obtained. Moreover, the attachment structure is characterized in that, as the protrusion amount control plates 71 of Embodiment 8, the plural types of protrusion amount control plates including the protrusion amount control portions 71b with different thickness are previously prepared, and one type selected from the plural types of protrusion amount control plates 71 are detachably attached to the outer frame 33 by the bolts 72. Accordingly, each protrusion amount control plate 71 attached to the mounting bush 30 is arbitrarily selected from the plural types of protrusion amount control plates 71 including the protrusion amount control portions 71b with different thickness, thus allowing the width of each gap S to be arbitrarily managed (adjusted). The spring constant of the rubber 35 can be therefore arbitrarily selected.

### <Embodiment 9>

Fig. 12(a) is a front view showing an assembled mounting bush in a rear axle attachment structure of a forklift according to Embodiment 9 of the present invention; Fig. 12(b) is a side view showing the assembled mounting bush (a view in a direction of an arrow J1 of Fig. 12(a)); Fig. 12(c) is a cross-sectional view showing the assembled mounting bush (a cross-sectional view taken along a line J2-J2 as viewed in a direction of arrows I2 of Fig. 12(a)); Fig. 12(d) is a side view of the mounting bush (a view in a direction of the arrow J1 of Fig. 12(a)); and Fig. 12(e) is a bottom view of the mounting bush (a view in a direction of an arrow J3 of Fig. 12(a)).

The entire constitution of the forklift and the constitution of the rear axle are the same as those of Embodiment 1 above (see Figs. 1 to 3), and the drawings and description thereof are omitted. As for the constitution shown in Fig. 12, same parts as those of Embodiment 7 above (see Fig. 10) are denoted with same reference numerals and the description thereof are omitted.

As shown in Figs. 12(a) to 12(e), the protrusion amount control plates 71 of Embodiment 9 are detachably attached to the attachment jig 36 by bolts 74 with spacers 73 interposed therebetween. Plural types of spacers 73 each having different thickness are previously prepared. One type selected from the plural types of spacers 73 is used for attachment of the protrusion amount control plates 71. In this case, the width of the gap S between each protrusion amount control plate 71 and the rubber 35 can be adjusted according to the thickness of each spacer 73. Specifically, in order to increase the width of each gap S, thick one of the spacers 73 should be used for attachment of the protrusion amount control plate 71. In order to reduce the width of each gap S, thin one of the spacers 73 should be used for attachment of the protrusion amount control plate 71.

The other constitution of the rear axle attachment structure of Embodiment 9 is the same as that of Embodiment 7 above (see Fig. 10).

As described above, according to the rear axle attachment structure of Embodiment 9, the same effects as those of Embodiment 7 above can be obtained. Moreover, the attachment structure is characterized in that the plural types of spacers 73 each having different thickness are prepared, and each protrusion amount control plate 71 is detachably attached to the outer frame 33 by the bolts 74 with any one type of the spacers 73 interposed therebetween. Accordingly, each spacer 73 attached to the mounting bush 30 is arbitrarily selected from the plural types of spacers 73 with different thickness, thus allowing the width of each gap S to be arbitrarily managed (adjusted). The spring constant of the rubber 35 can be therefore arbitrarily selected.

### <Embodiment 10>

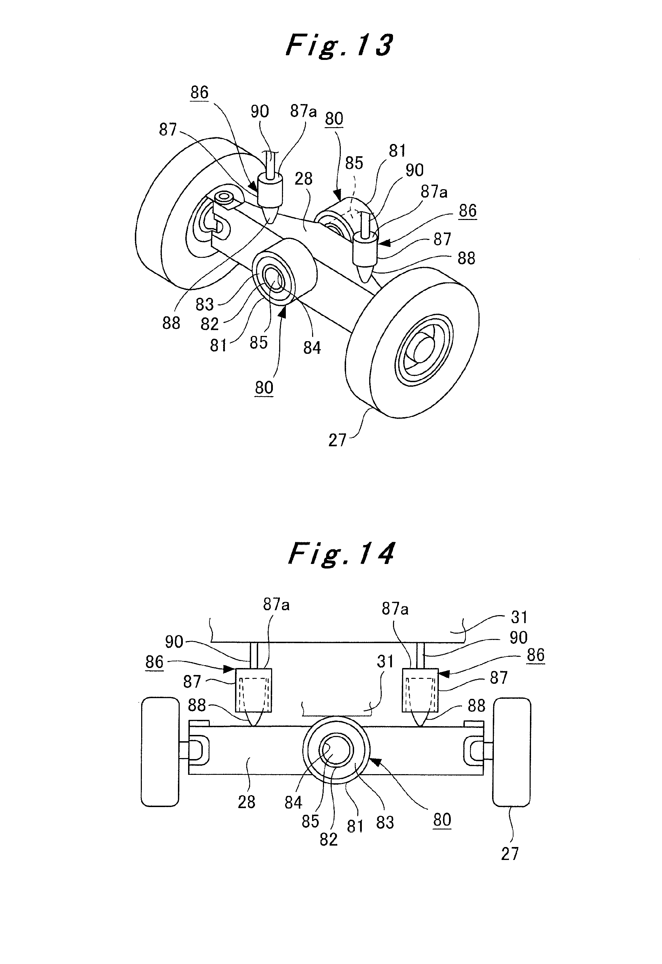

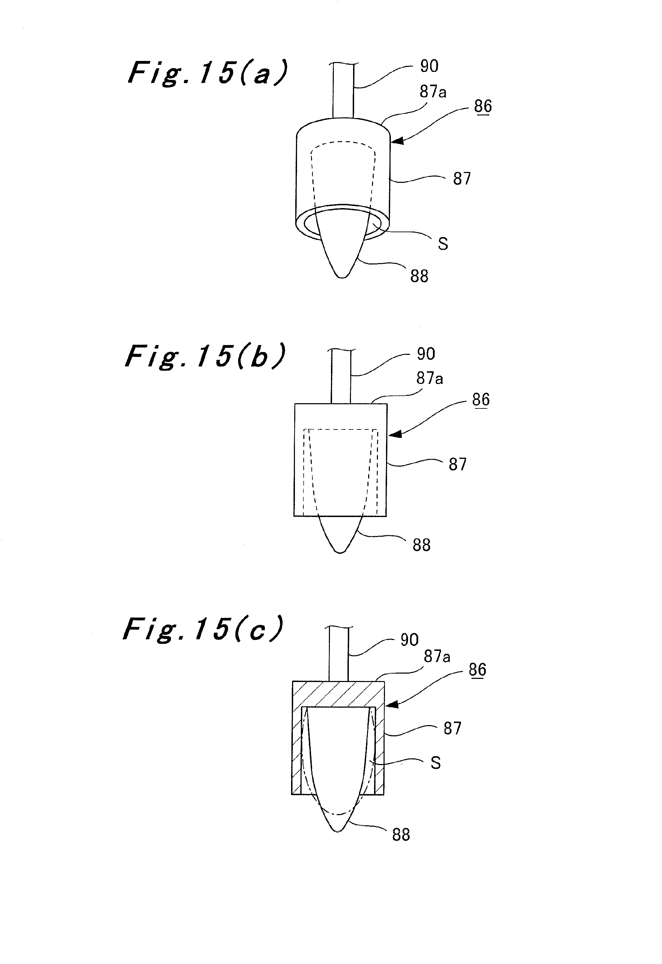

Fig. 13 is a perspective view of a rear axle attachment structure of a forklift according to Embodiment 10 of the present invention. Fig. 14 is a front view of the rear axle attachment structure. Fig. 15(a) is an enlarged perspective view of a stopper in the rear axle attachment structure; Fig. 15(b) is a front view of the stopper; and Fig. 15(c) is a cross-sectional view of the stopper.

The entire constitution of the forklift and the constitution of the rear axle are the same as those of Embodiment 1 above (see Figs. 1 to 3), and the drawings and description thereof are omitted.

As shown in Figs. 13 to 15, in Embodiment 10, columnar mounting bushes 80 made of rubber are provided to the vehicle front and rear sides of the rear axle 28, respectively. The rear axle 28 is attached to the vehicle body of the forklift (body frame 31) through these mounting bushes 80.

The front and rear mounting bushes 80 have a same constitution. Each of the front and rear mounting bushes 80 includes rubber 83 provided between a metallic and cylindrical outer frame 81 and a metallic and cylindrical inner frame 82. The rubber 83 is formed by, for example, pouring a heated rubber material into a space between the outer and inner frames 81 and 82, and adheres to the inner surface of the outer frame 81 and the outer surface of the inner frame 82. A mounting hole 84 within the inner frame 82 is circular. The outer frame 81 is fixed to the body frame 31 by fixation means such as welding to be integrated with the body frame 31.

The means for attaching the mounting bush 80 to the vehicle body is not necessarily limited to fixing the outer frame 81 directly to the body frame 31 as shown in the drawings. The mounting bush 80 may be attached by using an attachment jig, for example. The outer frame 81 of the mounting bush 80 is not limited to being circular and may be rectangular (square or oblong).

Cylindrical mounting shafts 85 protrude from the front and rear (the vehicle front and rear sides) of the rear axle 28. Each of the mounting shafts 85 is rotationally inserted into the mounting hole 84 of the mounting bush 80.

On the other hand, on top surface of both sides of the rear axle 28 in the vehicle width direction (on both right and left sides of the mounting bushes 80), stoppers 86 are provided. The stoppers 86 have a same constitution and restrict swinging of the rear axle 28 around the mounting shafts 85. In Embodiment 10, in other words, the mounting bushes 80 receive only vertical load while the stoppers 86 receive torsional load due to the swinging. Such constitution achieves load sharing.

Each of the stoppers 86 includes an inverted-cone-shaped rubber 86 and a cylindrical cover 87. The upper end of the rubber 86 is fixed to a top plate 87a of the cover 87 by fixation means such as an adhesive. The stopper 86 is attached to the body frame 31 of the forklift through a supporting rod 90 provided to the top plate 87a of the cover 87, but not limited this. The cover 87 may be attached directly to the vehicle body (body frame).

The bottom end of the rubber 86 may be always in contact with the top surface of the rear axle 28, or may be located a little away from the top surface of the rear axle 28 when the rear axle 28 is horizontal. In any case, when the rear axle 28 swings around the mounting shaft 85, the bottom end of at least one of the rubbers 86 comes into contact with the upper surface of the rear axle 28, and the stopper 86 restricts the swinging and absorb the impact force (load) due to the swinging by compression deformation of the rubber 86.

The cover 87 surrounds each rubber 86 with a gap S from the cover 87, thus controlling the amount of horizontal bulge of the rubber 86 compressed and deformed. The reason for providing the gaps S is the same as that of the cases of Embodiment 1 above and the like. Specifically, in the absence of the gap S, the horizontal bulge of the rubber 86 compressed and deformed is completely restricted by the cover 87. Accordingly, the impact force (load) cannot be absorbed by deformation of the rubber 86. On the other hand, if the gap S is excessively wide, the cover 87 has less effect on controlling the amount of bulge of the rubber 86. Accordingly, the specific width of each gap S should be properly set by experiments or the like while considering the balance between the effect of the rubber 86 on absorbing the impact force (load) and the effect of the cover 87 on controlling the amount of bulge.

As described above, according to the rear axle attachment structure of Embodiment 10, the attachment structure is characterized in that the mounting holes 84 of the mounting bushes 80 are circular, and the mounting shafts 85 are columnar and rotationally inserted into the mounting holes 84, and on the both sides of the top surface of the rear axle 28 in the vehicle width direction, provided are the stoppers 86 which are attached to the vehicle body side and restrict swinging of the rear axle 28 around the mounting shafts 85. Each of the stoppers 86 includes the inverted-cone-shaped rubber 88 and the cover 87 which surrounds the rubber 88 with the gap S from the rubber 88 and controls the amount of horizontal bulge of the rubber 88. Accordingly, the load is shared by the mounting bush 80 and stopper 86, and the rubber 85 of the mounting bush 80 is subjected to only vertical load. Thus, the deterioration (fatigue) of the rubber 85 of the mounting bushes 80 is controlled. It is therefore possible to increase the lifetime of the mounting bushes 80 and reduce the frequency of changing the mounting bushes 80. Moreover, by controlling the amount of bulge of the rubber 88 of the stopper 86 with the cover 87, the deterioration (fatigue) of the rubber 88 of the stopper 86 can be controlled. The lifetime of the stoppers 86 can be therefore increased also.

### <Embodiment 11>

In Embodiment 11, the protrusion amount control plates 41, 51, and 71 and the cover 87 in Embodiments 1 to 10 above are made of resin materials, but the drawings thereof are omitted. The resin materials in this case are configured to be harder than the rubber 35 or 86 because of the need to control the protrusion of the rubber 35 or the bulge of the rubber 86. Examples of such resin materials are plastic (FRP), polycarbonate, and acrylic resin.

As described above, according to the rear axle attachment structure of Embodiment 11, the same effects as those of Embodiments 1 to 10 can be obtained. Moreover, the attachment structure is characterized in that the protrusion amount control plates 41, 51, and 71 and the cover 87 are made of the resin materials. Accordingly, even if the mounting shaft 32 or 85 comes into contact with the protrusion amount control plate 41, 51, or 71 or the cover 87 when the mounting shaft 32 or 85 moves up as the rubber 35 of the mounting bush 30 deteriorates, the mounting shaft 32 or 85 can be prevented from being damaged by the protrusion amount control plates 41, 51, and 71 or the cover 87.

### <Embodiment 12>

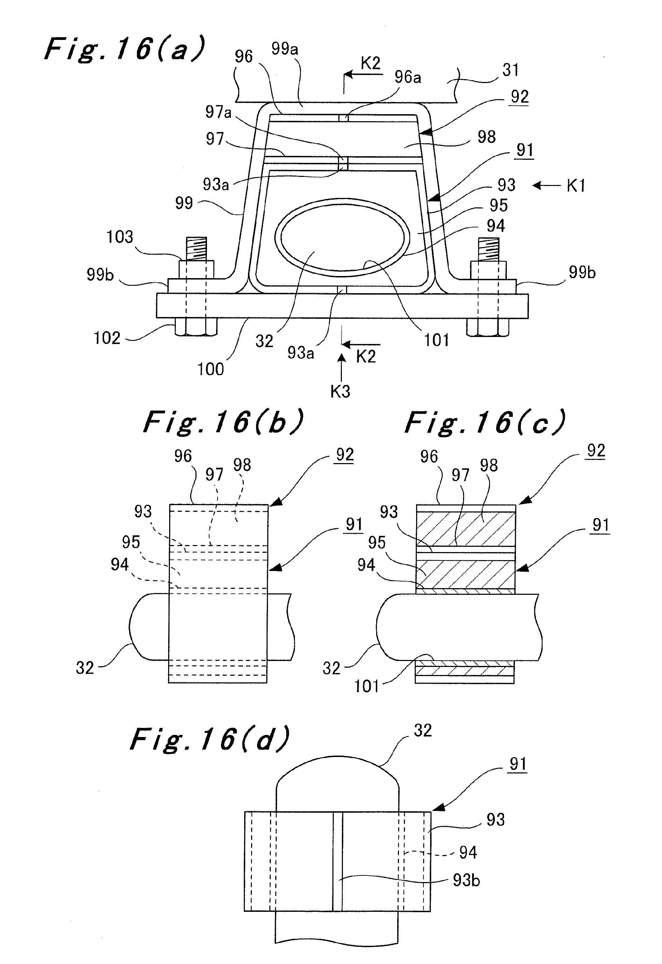

Fig. 16(a) is a front view showing an assembled mounting bush in a rear axle attachment structure of a forklift according to Embodiment 12 of the present invention; Fig. 16(b) is a side view showing the mounting bush (a view in a direction of an arrow K1 of Fig. 16(a)); Fig. 16(c) is a cross-sectional view showing the mounting bush (a cross-sectional view taken along a line K2-K2 as viewed in a direction of arrows K2 of Fig. 16(a)); and Fig. 16(d) is a bottom view of the mounting bush (a view in a direction of an arrow K3 of Fig. 16(a)).

The entire constitution of the forklift and the constitution of the rear axle are the same as those of Embodiment 1 above (see Figs. 1 to 3), and the drawings and description thereof are omitted.

As shown in Figs. 16(a) to 16(d), in Embodiment 12, a rubber-made mounting bush for attachment of the rear axle 28 (see Figs. 1 to 3) to the vehicle body has a dual structure in which a first mounting bush 91 is laid on a second mounting bush 92.

The first mounting bush 91 includes rubber 95 between a tubular outer frame 93 and a tubular inner frame 94. The outer frame 93 is made of metal and is trapezoidal in the front view. The inner frame 94 is made of metal and is elliptical in the front view. The outer frame 93 is divided at a central separating portion 93b into two blocks of right and left. The rubber 95 is formed by pouring a heated rubber material into a space between the outer and inner frames 93 and 94, for example, and adheres to the inner surface of the outer frame 93 and outer surface of the inner frame 94.

The second mounting bush 92 includes rubber 98 between an upper plate 96 and a lower plate 97. The rubber 98 is formed by pouring a heated rubber material into a space between the upper and lower plates 96 and 97, for example, and adheres to the lower surface of the upper plate 96 and the upper surface of the lower plate 97. The upper plate 96 is divided at a central separating portion 96a into two blocks of right and left, and the lower plate 97 is divided at a central separating portion 97a into two blocks of right and left.

The second mounting bush 92 is formed into a trapezoid in the front view, and the entire shape of the mounting bush with the dual structure where the second mounting bush 92 is laid on the first mounting bush 91 is also trapezoidal in the front view. The first and second mounting bushes 91 and 92 of the dual structure are attached to the body frame 31 by means of attachment jigs 99 and 100. The mounting shaft 32 is inserted into a mounting hole 101 within the inner frame 94 of the first mounting bush 91.

The attachment jig 99 includes a body 99a which is made of metal and is trapezoidal in the front view, and flanges 99b horizontally extending on both sides of the body 99a. The body 99a is fixed to the body frame 31 by fixation means such as welding to be integrated with the body frame 31. The attachment jig 100 is made of metal and is plate-shaped.

The first and second mounting bushes 91 and 92 of the dual structure are fitted into the body 99a of the attachment jig 99 in such a manner as to be pressed upward from below. The width of the separating portion 93a of the outer frame 93 and the separating portions 96a and 96b of the upper and lower plates 96 and 97 are narrowed at this time, and the rubbers 95 and 98 are always subjected to compression load. Accordingly, the mounting bushes 91 and 92 are reliably fixed to the attachment jig 36. The attachment jig 100 is fastened to the flanges 99b of the attachment jig 99 by means of bolts 102 and nuts 103 to support the bottom surface of the first mounting bush 91. The attachment jig 100 surrounds the first and second mounting bushes 91 and 92 together with the attachment jig 99 supporting the top surface of the second mounting bush 92 and the side surfaces of the first and second mounting bushes 91 and 92.

The mounting shaft 32 and mounting hole 101 are elliptical in the front view. This prevents the mounting shaft 32 from freely rotating when the rear axle 28 (see Figs. 1 to 3) swings (rolls) around the mounting shaft 32. The mounting bush 30 can therefore receive not only vertical load but also torsional load at the swinging.

The means of attaching the mounting bushes 91 and 92 to the vehicle body (body frame) is not necessarily limited to using the attachment jigs 99 and 100. The mounting bushes 91 and 92 may be attached by welding the outer frame 93 of the mounting bush 91 and the upper plate 96 of the mounting bush 91 directly to the vehicle body (body frame) or the like.

As described above, according to the rear axle attachment structure of Embodiment 12, the attachment structure is characterized in that the mounting bush has the dual structure in which the second mounting bush 92 is laid on the first mounting bush 91. The first mounting bush 91 includes the rubber 95 between the tubular outer frames 93 and tubular inner frames 94. The mounting shaft 32 is inserted into the mounting hole 101 within the inner frame 94. The second mounting bush 92 includes the rubber 98 between the upper and lower plates 96 and 97. Compared to the rubber 95 of the lower first mounting bush 91, in which the mounting shaft 32 is inserted into the mounting hole 101, the rubber 98 of the upper second mounting bush 92, which is separated from the mounting shaft 32, is less likely to be deteriorated (fatigued) by load. Accordingly, even if the mounting shaft 32 is displaced up because of deterioration of the rubber 95 of the first mounting bush 91, the presence of the not-deteriorated second mounting bush 92 (rubber 98) can prevent the mounting shaft 32 from coming into contact with the vehicle body (body frame 31) to prevent damages of the same.

### <Embodiment 13>

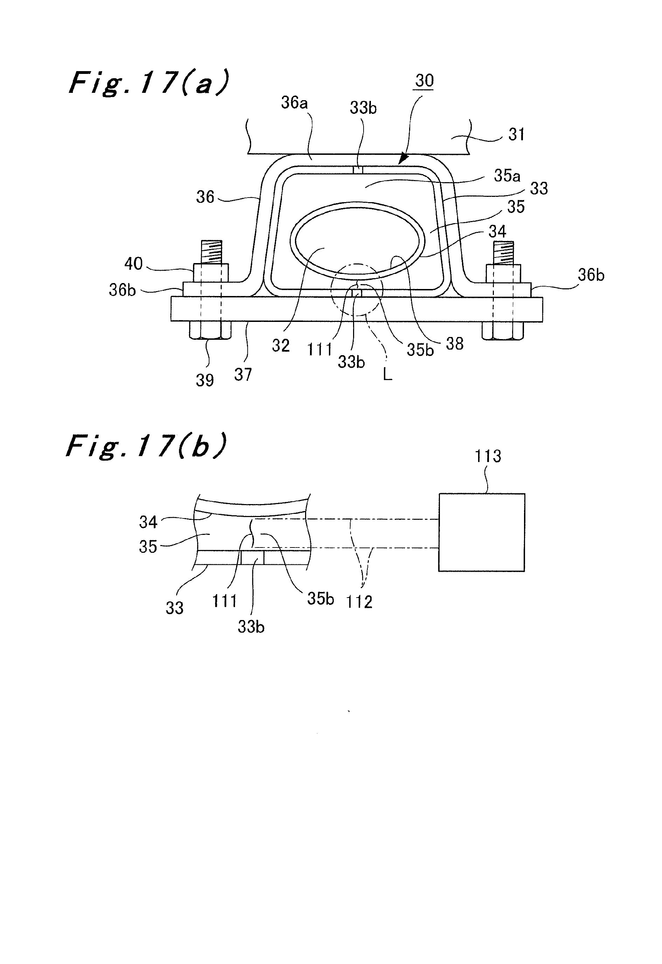

Fig. 17(a) is a front view showing an assembled mounting bush in a rear axle attachment structure of a forklift according to Embodiment 13 of the present invention; and Fig. 17(b) is an enlarged view of part L of Fig. 16(a).

The entire constitution of the forklift and the constitution of the rear axle are the same as those of Embodiment 1 above (see Figs. 1 to 3), and the drawings and description thereof are omitted. As for the constitution shown in Fig. 17, same parts as those of Embodiment 2 above (see Fig. 5(a)) are denoted with same reference numerals and the description thereof are omitted.

As shown in Figs. 17(a) and 17(d), the mounting bush 30 of Embodiment 3 includes a thin wire 111 provided at a lower portion 35b of the rubber 35 below the inner frame 34. The wire 111 may be attached to the surface of the rubber 35 by fixation means such as an adhesive like the example shown in the drawings, or may be embedded in the rubber 35.

When the lower portion 35b of the rubber 35 is stretched upward by compression deformation of the upper portion 35a of the rubber 35 above the inner frame 34, the wire 111 is also stretched upward and disconnected by the tensile load at that time. The wire 111 attached is bent a little (bent in the form of letter S in the drawings) so that the wire 111 is not disconnected by a little stretch. How much the lower portion 35b is stretched when the wire 111 is disconnected should be properly set by experiments or the like while considering the degree of deterioration of the rubber 35.

In the example of the drawings, the wire 111 is provided for only the lower portion 35a of the rubber 35, but not limited this. The upper end of the wire 111 in the lower portion 35a of the rubber 35 may be connected to the inner frame 34 (the bottom of the inner frame 34) positioned above by proper connection means such as an adhesive, while the bottom end of the wire 111 may be connected to the outer frame 33 positioned below (the bottom of the outer frame 33) by proper connection means such as an adhesive.

The other constitution of the rear axle attachment structure of Embodiment 13 is the same as that of Embodiment 2 above (see Fig. 5(a)).

As shown in Fig. 17(d), the wire 111 is electrically connected to a disconnection detection device 113 (disconnection detection means) through a connection cable 112. The disconnection detection device 113 always or periodically applies current to the wire 111 and detects reduction of the current value when the wire 111 is disconnected, thus detecting disconnection of the wire 111. Moreover, the disconnection of the wire 111 may be detected by detecting another electrical change (for example, a change in voltage, electrical resistance, or the like when the wire 111 is disconnected).

As described above, according to the rear axle attachment structure of Embodiment 13, the attachment structure is characterized by including: the wire 111 provided at the lower portion 35b of the rubber 25 below the inner frame 34; and the disconnection detection device 113 detecting the disconnection by detecting an electrical change in the wire 111 when the wire 111 is stretched upward together with the lower portion 35b of the rubber 35 to be disconnected. When the compression deformation of the upper portion 35a of the rubber 35 increases as the rubber 35 of the mounting bush 30 deteriorates (fatigues), the amount of protrusions increases, and therefore the stretch of the lower portion 35b of the rubber 35 increases. The wire 111 is accordingly stretched and is disconnected, and the disconnection device 113 detects the disconnection. This makes it possible to confirm the time to change the mounting bush 30.

### <Embodiment 14>

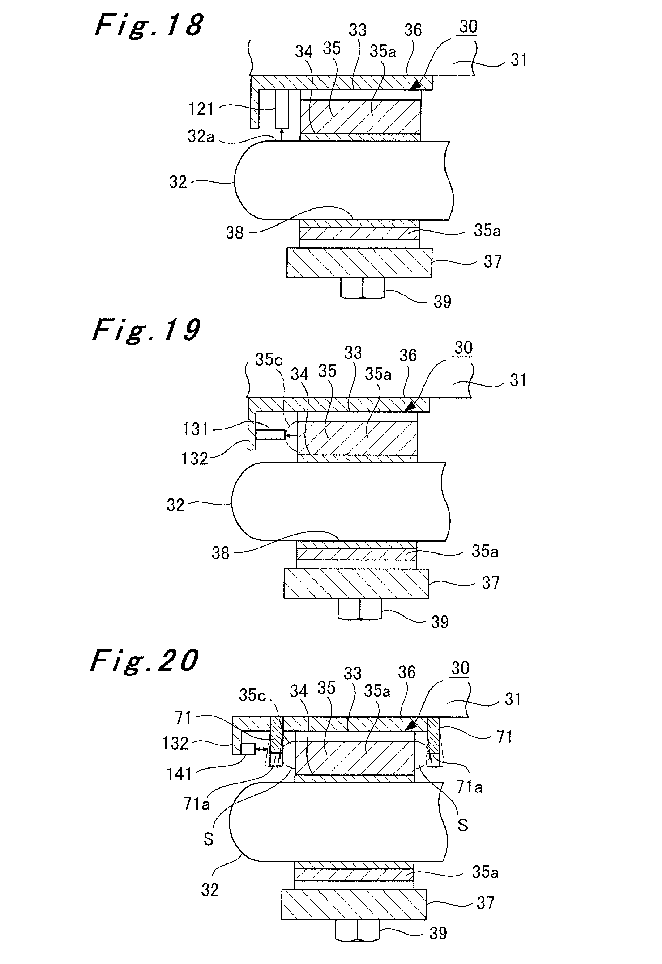

Fig. 18 is a cross-sectional view showing an assembled mounting bush in a rear axle attachment structure of a forklift according to Embodiment 14 of the present invention.

The entire constitution of the forklift and the constitution of the rear axle are the same as those of Embodiment 1 above (see Figs. 1 to 3), and the drawings and description thereof are omitted. As for the constitution shown in Fig. 18, same parts as those of Embodiment 7 above (see Fig. 10(c)) are denoted with same reference numerals and the description thereof are omitted.

As shown in Fig. 18, the rear axle attachment structure of Embodiment 14 includes a contact sensor 121 as displacement amount detection means detecting an amount of upward displacement of the mounting shaft 32.

The contact sensor 121 is attached to the attachment jig 36 and is positioned above the mounting shaft 32. The contact sensor 121 faces the outer circumferential surface 32a of the mounting shaft 32. Accordingly, when the mounting shaft 32 is displaced (moves) upward as the rubber 35 of the mounting bush 30 deteriorates, the outer circumferential surface 32a thereof comes into contact with the contact sensor 121. The contact sensor 121 then detects the contact and outputs a detection signal. The detection signal of the contact sensor 121 is given to an operator or the like by informing means such as monitor display and an alarm lamp.

The specific distance to be set between the contact sensor 121 and mounting shaft 32, that is, the amount of upward displacement of the mounting shaft 32 to be detected by the contact sensor 121 should be properly set by experiments or the like while considering the degree of deterioration of the rubber 35. The contact sensor 121 can be attached to not only the attachment jig 36 but also a proper place of the vehicle body such as the body frame 31. Moreover, the displacement amount detection means detecting the amount of upward displacement of the mounting shaft 32 is not limited to the contact sensor 121 and can be a pressure sensor, a non-contact proximity sensor (a proximity switch), a distance sensor, or the like.

The other constitution of the rear axle attachment structure of Embodiment 14 is the same as that of Embodiment 7 above (see Fig. 10(c)).

As described above, according to the axle attachment structure of Embodiment 14, the attachment structure is characterized by including the displacement amount detection means such as the contact sensor 121 detecting the amount of upward displacement of the mounting shaft 32. Accordingly, when the mounting shaft 32 is displaced (moves) upward as the rubber 35 of the mounting bush 30 deteriorates (fatigues), the amount of displacement of the mounting shaft 32 can be detected by the displacement amount detection means. It is therefore possible to confirm the time to change the mounting bush 30.

### <Embodiment 15>

Fig. 19 is a cross-sectional view showing an assembled mounting bush in a rear axle attachment structure of a forklift according to Embodiment 15 of the present invention.

The entire constitution of the forklift and the constitution of the rear axle are the same as those of aforementioned Embodiment 1 (see Figs. 1 to 3), and the drawings and description thereof are omitted. As for the constitution shown in Fig. 19, same parts as those of Embodiment 7 above (see Fig. 10(c)) are denoted with same reference numerals and the description thereof are omitted.

As shown in Fig. 19, the rear axle attachment structure of Embodiment 14 includes a pressure sensor 131 as protrusion amount detection means detecting an amount of protrusion of the upper portion 35a of the rubber 35 of the mounting bush 30, the portion 35a being above the inner frame 34 and protruding from between the outer and inner frames 33 and 34.

The pressure sensor 131 is attached to a supporting plate 132 provided at an end of the attachment jig 36 and is positioned on the vehicle front side of the upper portion 35a of the rubber 35. The pressure sensor 131 faces the upper portion 35a of the rubber 35. Accordingly, when the amount of protrusion of the upper portion 35a is increased because of deterioration of the rubber 35, the protruding portion 35c presses the pressure sensor 131. The pressure sensor 131 then detects the pressure and outputs a detection signal. The detection signal of the pressure sensor 131 is given to an operator or the like by informing means such as monitor display and an alarm lamp.

The pressure sensor 131 surely may be positioned on the vehicle rear side of the upper portion 35a of the rubber 35. The specific distance to be set between the pressure sensor 131 and the upper portion 35a of the rubber 35, that is, the amount of protrusion of the upper portion 35a of the rubber 35 to be detected by the pressure sensor 131 should be properly set by experiments or the like by considering the degree of deterioration of the rubber 35. The pressure sensor 131 can be attached to not only the attachment jig 36 but also a proper place of the vehicle body such as the body frame 31. Moreover, the protrusion amount detection means detecting the amount of protrusion of the upper portion 35a of the rubber 35 is not limited to the pressure sensor 131 and can be a contact sensor, a non-contact proximity sensor (a proximity switch), a distance sensor, or the like.

The other constitution of the rear axle attachment structure of Embodiment 15 is the same as that of Embodiment 7 above (see Fig. 10(c)).

As described above, according to the rear axle attachment structure of Embodiment 15, the attachment structure is characterized by including the protrusion amount detection means such as the pressure sensor 131 detecting the amount of protrusion of the upper portion 35a of the rubber 35, the portion 35a being above the inner frame 34 and protruding from between the outer and inner frames 33 and 34. When the compression deformation of the upper portion 35a of the rubber 35 increases as the rubber 35 of the mounting bush 30 deteriorates (fatigues), the amount of protrusion increases. Accordingly, the amount of protrusion can be then detected by the protrusion amount detection means. It is therefore possible to confirm the time to change the mounting bush 30.

### <Embodiment 16>

Fig. 20 is a cross-sectional view showing an assembled mounting bush in a rear axle attachment structure of a forklift according to Embodiment 16 of the present invention.

The entire constitution of the forklift and the constitution of the rear axle are the same as those of aforementioned Embodiment 1 (see Figs. 1 to 3), and the drawings and description thereof are omitted. As for the constitution shown in Fig. 20, same parts as those of Embodiment 7 above (see Fig. 10(c)) are denoted with same reference numerals and the description thereof are omitted.

As shown in Fig. 20, the rear axle attachment structure of Embodiment 16 includes a proximity sensor (proximity switch) 141 as displacement amount detection means detecting an amount of displacement of the protrusion amount control plate 71 in the vehicle front-rear direction.

The proximity sensor 141 is attached to the supporting plate 132 provided at the end of the attachment jig 36 and positioned on the vehicle front side of the front protrusion amount control plate 71. The proximity sensor 141 faces the front protrusion amount control plate 71. When the front protrusion amount control plate 71 is pressed by the protruding portion 35c of the upper portion 35a which protrudes from between the outer and inner frames 33 and 34 because of deterioration of the rubber, the front protrusion amount control plate 71 is displaced (bends) to the vehicle front side as indicated by a dotted-dashed line in Fig. 20 and approaches the proximity sensor 141. Then, the proximity sensor 141 detects the protrusion amount control plate 71 and outputs a detection signal. The detection signal of the proximity sensor 141 is given to an operator or the like by informing means such as monitor display and an alarm lamp.

In this case, the protrusion amount control plate 71 is preferably made of resin so as to be displaced (bent) by the pressing of the protrusion portion 35c of the rubber 35, but may be made of metal if the thickness thereof is properly made small.

The proximity sensor 141 may be positioned on the vehicle rear side of the rear protrusion amount control plate 17. Moreover, the specific distance to be set between the proximity sensor 141 and the protrusion amount control plate 71, that is, the amount of displacement of the protrusion amount control plate 71 to be detected by the proximity sensor 141 should be properly set by experiments or the like by considering the degree of deterioration of the rubber 35 and the like. The proximity sensor 141 can be attached not only to the attachment jig 36 but also to a proper place of the vehicle body such as the body frame 31. Moreover, the displacement amount detection means detecting the amount of displacement of the protrusion amount control plate 71 is not limited to the proximity sensor 141 and can be a contact sensor, a pressure sensor, a non-contact distance sensor, or the like.

The other constitution of the rear axle attachment structure of Embodiment 16 is the same as that of Embodiment 7 above (see Fig. 10(c)).

As described above, according to the rear axle attachment structure of Embodiment 16, the same effect as those of Embodiment 7 above can be obtained. Moreover, the attachment structure is characterized by including the displacement amount detection means such as the proximity sensor 141 detecting the amount of displacement of protrusion amount control plate 71 toward the front or rear of the vehicle. Accordingly, when the amount of protrusion of the upper portion 35a of the rubber 35 increases as the rubber 35 of the mounting bush 30 deteriorates (fatigues), the protrusion amount control plate 71 is pressed by the protrusion portion 35c of the upper portion 35a and is displaced to the front or rear of the vehicle. The amount of displacement can be then detected by the displacement amount detection means. It is therefore possible to confirm the time to change the mounting bush 30.

The present invention can be applied to the cases where the protrusion amount control plates 41 and 71 are provided at the outer frame 33 of the mounting bush 30, as in like Embodiments 1 and 2 above.

### <Embodiment 17>

Fig. 21 is a front view showing an assembled mounting bush in a rear axle attachment structure of a forklift according to Embodiment 17 of the present invention.

The entire constitution of the forklift and the constitution of the rear axle are the same as those of Embodiment 1 above (see Figs. 1 to 3), and the drawings and description thereof are omitted. As for the constitution shown in Fig. 21, same parts as those of Embodiment 2 above (see Fig. 5(a)) are denoted with same reference numerals and the description thereof are omitted.

As shown in Fig. 21, in the rear axle attachment structure of Embodiment 17, width d1 of the upper portion 35a of the rubber 35 between the outer and inner frames 33 and 34 is equal to width d2 of the lower portion 35b of the rubber 35 between the outer and inner frames 33 and 34.

The other constitution of the rear axle attachment structure of Embodiment 16 is the same as that of Embodiment 2 above (see Fig. 5(a)).

As described above, according to the rear axle attachment structure of Embodiment 17, the attachment structure is **characterized in that** the width d1 of the upper portion 35a of the rubber 35 between the outer and inner frames 33 and 34 is equal to the width d2 of the lower portion 35b of the rubber 35 between the outer and inner frames 33 and 34. Accordingly, the upper and lower portions 35a and 35b of the rubber 35 have equal rigidity, thus facilitating the management of the spring constant of the rubber 35 and of the degree of progress of deterioration (fatigue) of the rubber 35.

Embodiments 1 to 9 and 11 to 17 are described with the examples of the cases where the outer frames of the mounting bushes are trapezoidal, but not limited to this. The outer frame of the mounting bush may be rectangular (square or oblong).

### INDUSTRIAL AVAILABILITY

The present invention relates to a forklift rear axle attachment structure and a forklift including the same and is usefully applied to the cases where the rear axle is attached to the vehicle body using rubber-made mounting bushes.

## Claims

1. A rear axle attachment structure of a forklift including mounting shafts protruding respectively from front and rear sides of a rear axle and mounting bushes each having a configuration in which rubber is provided between a tubular outer frame and a tubular inner frame and being attached to a vehicle body, each of the mounting shafts being inserted into a mounting hole within the inner frame, the attachment structure **characterized by** comprising
protrusion amount control means controlling an amount of protrusion of an upper portion of the rubber above the inner frame, the upper portion protruding from between the outer and inner frames in vehicle front and rear directions.

2. The rear axle attachment structure of a forklift according to claim 1, **characterized in that**
the protrusion amount control means is protrusion amount control plates provided at front and rear of the upper part of the outer frame with a gap between the rubber and each protrusion amount control plate.

3. The rear axle attachment structure of a forklift according to claim 1, **characterized in that**
the outer frame is trapezoidal or rectangular, and
the protrusion amount control means is triangular protrusion amount control plates provided respectively at front and rear of each upper corner of the outer frame with a gap between the rubber and each protrusion amount control plate.

4. The rear axle attachment structure of a forklift according to any one of claim 2 and 3, **characterized in that**
as the protrusion amount control plates, a plurality of types of protrusion amount control plates including protrusion amount control portions different in thickness are prepared, and one selected from the plurality of types of protrusion amount control plates is detachably bolted to the outer frame.

5. The rear axle attachment structure of a forklift according to any one of claim 2 and 3, **characterized in that**
a plurality of types of spacers different in thickness are prepared, and
each of the protrusion amount control plates is detachably bolted to the outer frame with any one of the spacers interposed therebetween.

6. The rear axle attachment structure of a forklift according to claim 1, **characterized in that**
the protrusion amount control means is protrusion amount control plates provided on a vehicle body in front and rear of each mounting bush with a gap between the rubber and each protrusion amount control plate.

7. The rear axle attachment structure of a forklift according to any one of claim 2 and 6, **characterized in that**
a recessed portion having a shape following an outer circumference of the mounting shafts is formed at the bottom end of each of the protrusion amount control plates.

8. The rear axle attachment structure of a forklift according to claim 6, **characterized in that**
as the protrusion amount control plates, a plurality of types of protrusion amount control plates including protrusion amount control portions different in thickness are prepared, and one selected from the plurality of types of protrusion amount control plates are detachably bolted to the vehicle body.

9. The rear axle attachment structure of a forklift according to claim 6, **characterized in that**
a plurality of types of spacers different in thickness are prepared, and
each of the protrusion amount control plates is detachably bolted to the vehicle body with any one of the spacers interposed therebetween.

10. A rear axle attachment structure for a forklift including mounting shifts protruding from front and rear sides of a rear axle and mounting bushes each having a configuration in which rubber is provided between a tubular outer frame and a tubular inner frame and being attached to a vehicle body, each of the mounting shafts being inserted into a mounting hole within the inner frame, the attachment structure **characterized in that**
the mounting hole of each mounting bush is circular,
each mounting shaft is columnar and is rotatably inserted into the mounting hole,
stoppers which are attached to the vehicle body and restrict swinging of the rear axle around the mounting shafts are provided on both sides in a vehicle width direction of top surface of the rear axle, and each of the stoppers includes an inverted-cone-shaped rubber and a cover surrounding the rubber with a gap between the rubber and the cover to control an amount of horizontal bulge of the rubber.

11. The rear axle attachment structure of a forklift according to any one of claims 2, 3, 6, and 10, **characterized in that**
any one of the protrusion amount control plates and the cover is made of resin material.

12. A rear axle attachment structure of a forklift including mounting shafts protruding from front and rear sides of a rear axle and mounting bushes, the mounting shafts being inserted into mounting holes of the mounting bushes, the attachment structure **characterized in that**
each of the mounting bushes has a dual structure in which a second mounting bush is laid on a first mounting bush,
each of the first mounting bushes has a configuration in which rubber is provided between a tubular outer frame and a tubular inner frame, and the mounting shaft is inserted into the mounting hole within the inner frame, and each of the second mounting bushes has a configuration in which rubber is provided between an upper plate and a lower plate.

13. A rear axle attachment structure of a forklift including mounting shafts protruding from front and rear sides of a rear axle and mounting bushes each having a configuration in which rubber is provided between a tubular outer frame and a tubular inner frame and being attached to a vehicle body, each of the mounting shafts being inserted into a mounting hole within the inner frame, the attachment structure **characterized by** comprising:
a wire provided in a lower portion of the rubber below the inner frame, and
disconnection detection means detecting disconnection of the wire by detecting an electrical change of the wire when the wire is stretched upward together with the lower portion of the rubber and is disconnected.

14. A rear axle attachment structure of a forklift including mounting shafts protruding from front and rear sides of a rear axle and mounting bushes each having a configuration in which rubber is provided between a tubular outer frame and a tubular inner frame and being attached to a vehicle body, each of the mounting shafts being inserted into a mounting hole within the inner frame, the attachment structure **characterized by** comprising
displacement amount detection means detecting an amount of upward displacement of the mounting shafts.

15. A rear axle attachment structure of a forklift including mounting shafts protruding from front and rear sides of a rear axle and mounting bushes each having a configuration in which rubber is provided between a tubular outer frame and a tubular inner frame and being attached to a vehicle body, each of the mounting shafts being inserted into a mounting hole within the inner frame, the attachment structure **characterized by** comprising
protrusion amount detection means detecting an amount of protrusion of an upper portion of the rubber above the inner frame, the upper portion protruding from between the outer and inner frames.

16. The rear axle attachment structure for a forklift according to any one of claims 2, 3, and 6, **characterized by** further comprising
displacement amount detection means detecting an amount of displacement of the protrusion amount control plates in the vehicle front or rear directions.

17. A rear axle attachment structure for a forklift including mounting shafts protruding from front and rear sides of a rear axle and mounting bushes each having configuration in which rubber is provided between a tubular outer frame and a tubular inner frame and being attached to a vehicle body, each of the mounting shafts being inserted into a mounting hole within the inner frame, the attachment structure **characterized in that**
the width of an upper portion of the rubber above the inner frame between the outer and inner frames is equal to the width of a lower portion of the rubber below the inner frame between the outer and inner frames.

18. A forklift, comprising the rear axle attachment structure according to any one of claims 1 to 17.
